# FASCICULE DE BREVET EUROPEEN

(11) **EP 0 475 161 B1**
(45) Date de publication et mention de la délivrance du brevet: **06.09.1995**
(21) Numéro de dépôt: 91114165.3
(22) Date de dépôt: 23.08.1991
(51) Int. Cl.: H04L 12/56

(54) **Système de mémorisation temporaire d'information comprenant une mémoire tampon enregistrant des données structurées en blocs de données de longueur fixe ou variable**
Datenpufferungssystem mit einem Pufferspeicher der Datenblöcke mit fester oder veränderlicher Länge speichert
Temporary data storage system having a buffer memory for holding data blocks of fixed or variable length

(30) Priorité: 31.08.1990 FR 9010877
(43) Date de publication de la demande: 18.03.1992
(73) Titulaire: ALCATEL N.V., NL-1077 XX Amsterdam (NL)
(72) Inventeur: Henrion, Michel, B-1930 Zaventem (BE)
(74) Mandataire: Weinmiller, Jürgen

(56) Documents cités:
- EP-A- 0 299 473
- EP-A- 0 323 310
- FR-A- 2 549 673

## Description

La présente invention concerne un système de mémorisation temporaire d'information comprenant une mémoire tampon enregistrant des données structurées en blocs de données de longueur fixe ou variable, comportant chacun un ou plusieurs éléments de données, une pluralité de files d'attente servant à lier entre eux les blocs de données en vue de les fournir de façon sélective sur des sorties individuelles pouvant appartenir à des destinations distinctes et une logique de gestion de ces files d'attente (voir par exemple le document EP-A-0 299 473).

Un tel système de mémorisation, en lui adjoignant des entrées associées à la mémoire tampon, constitue un dispositif de commutation de données dans lequel les données reçues par les entrées sont enregistrées dans la mémoire tampon pour être ensuite retransmises sur les sorties, en fonction d'indications de sélection. Ces indications de sélection peuvent plus généralement désigner une destination sortante ; elles peuvent accompagner les données reçues par les entrées, ou être incluses dans ces données et serviront à diriger leur transfert vers au moins une sortie d'une destination sortante désignée. Ce dispositif de commutation trouvera son emploi dans les réseaux de communication. Mais, le système de mémorisation de l'invention, tel quel, peut trouver bien d'autres applications, toutes les fois que des données structurées en blocs de données d'un ou plusieurs d'éléments de données doivent être mis à la disposition de sorties multiples appartenant à des destinations distinctes. Dans un système expert, par exemple, un tel système de mémorisation peut servir à enregistrer des données à traiter et à les soumettre à des processeurs multiples. Plusieurs processeurs accomplissant en parallèle un traitement particulier correspondront alors à une destination sortante.

Dans une forme de réalisation connue, décrite dans la demande de brevet WO-A-91/02420 publiée le 21.02.91, le système de mémorisation comprend une file d'attente par sortie. La logique (appelée système) de gestion de files d'attente a pour fonction de lier l'identité de chaque bloc de données (appelé cellule) enregistré dans la mémoire tampon, lorsqu'il doit être transféré vers une destination sortante, dans une file d'attente d'une sortie sélectionnée appartenant à une destination, et cela pour une ou plusieurs destinations désignées. La sélection d'une sortie parmi celles qui appartiennent à une même direction sortante se fait par exemple au hasard.

L'avantage d'une telle solution tient à sa simplicité apparente. Lorsqu'une sortie devient disponible il lui suffit de servir sa propre file d'attente de sortie qui lui fournit l'identité d'un bloc de données contenu dans la mémoire tampon et qui lui est destiné.

Par contre, chaque sortie doit faire face aux transferts qui lui sont demandés par sa file d'attente, c'est-à-dire qui lui ont été assignés dans le passé, sans égard pour sa situation présente qui peut être défavorable à l'égard d'un tel trafic (surcharge, défaillance, maintenance, etc.). De plus, l'inscription en file d'attente ne tient pas compte de la charge de trafic déjà attribuée à une sortie et ne tient pas compte non plus, dans cette charge de trafic, des longueurs différentes des blocs de données qui lui sont assignés. Il s'ensuit que, de manière inhérente, cette solution charge inégalement les différentes sorties appartenant à une même destination sortante.

Pour pallier cet inconvénient, différentes solutions connues consistent à ajouter, pour chaque sortie, un dispositif de mesure de délai accumulé dans la file d'attente relative à cette sortie ou, en d'autres termes, de la quantité d'information accumulée et en attente pour cette sortie, c'est-a-dire du nombre total d'éléments de données correspondant aux blocs de données de longueur variable en attente. Alors, l'équilibrage de trafic sur les sorties est réalisé par un circuit de sélection de la sortie, parmi un groupe de sorties, dont le circuit de mesure de délai accumulé dans la file d'attente indique une valeur plus faible que ceux des autres sorties de ce groupe.

En outre, il est souvent nécessaire que le choix de la sortie dans un groupe de sorties introduise une décorrélation du trafic sortant (c'est-à-dire que ce choix soit effectué indépendamment de l'écoulement précédent du trafic sur les sorties). Prise isolément, cette exigence reste simple à satisfaire, en introduisant l'effet d'une source de signaux aléatoires dans le choix de l'une des sorties du groupe. Toutefois, l'utilisation de ce mécanisme devient plus coûteuse ou moins rapide dans le cas d'un transfert de cellule de point à multipoint; en effet, dans ce dernier cas, l'identité de la cellule doit être écrite dans plusieurs files d'attente, une par sortie sélectionnée pour recevoir une copie de la cellule destinée à un des plusieurs groupes de sorties destinataires sélectionnés. Il faut alors soit un circuit de sélection aléatoire par groupe de sorties, pour procéder en parallèle et sans délai additionnel, soit procéder en série dans le temps pour les différents groupes de sorties sélectionnés, ce qui augmente la durée d'exécution.

Enfin, le problème devient beaucoup plus compliqué lorsque les deux exigences précédentes (équilibrage de trafic sur les différentes sorties par groupe et choix aléatoire de ces sorties pour décorréler le trafic sortant) doivent être satisfaites simultanément. En effet, les algorithmes de principe décrits précédemment pour ces deux exigences considérées isolément sont contradictoires. Ils ne peuvent pas être combinés logiquement de façon simple pour satisfaire ces exigences au moment du transfert sortant effectif des blocs de données sur les sorties sélectionnées (lecture des files d'attente), alors que cette opération de sélection est effectuée au moment de l'inscription de l'identité du bloc de données dans une (ou plusieurs) file(s) d'attente de sortie. La mise en oeuvre d'une solution combinant les algorithmes requis pour satisfaire ces deux exigences, y compris dans le cas de transfert de point à multipoint, en sélectionnant une sortie dans chaque groupe de sorties destinataires, avant la mise en file d'attente de sortie de l'identité du bloc de données implique une complexité très importante et donc des coûts très élevés.

La présente invention propose un système de mémorisation temporaire d'information comprenant une mémoire tampon enregistrant des données structurées en blocs de données de longueur fixe ou variable, comportant chacun un ou plusieurs éléments de données, une pluralité de files d'attente servant à lier entre eux les blocs de données en vue de les fournir de façon sélective sur des sorties individuelles pouvant appartenir à des destinations distinctes et une logique de gestion de ces files d'attente, tel que défini précédemment, qui ne souffre pas des inconvénients cités.

Le système de mémorisation temporaire d'information de la présente invention est caractérisé par le fait qu'il comprend une logique de gestion de files d'attente de blocs de données et de sélection de sortie contenant une file d'attente propre à chaque destination sortante, de sorte que, un bloc de données étant assigné à une destination sortante, il suffit de lier son identité dans la file d'attente de cette destination sortante, ladite logique de gestion de files d'attente de blocs de données et de sélection de sortie comprenant des moyens de sélection de bloc de données intervenant lorsqu'à une sortie individuelle doit être affecté un bloc de données, identifiant une file d'attente d'une destination sortante à laquelle cette sortie appartient, en obtenant la désignation d'un bloc de données et affectant le bloc de données désigné à la sortie considérée en initialisant le transfert de ce bloc de données vers cette sortie individuelle.

Ainsi, selon l'invention, l'équilibrage du trafic de blocs de données sur les sorties de chaque groupe de sorties sera déjà obtenu simplement (sans addition de circuits de supervision de charge de trafic par sortie) par le fait que chaque file d'attente associée au groupe de sorties d'une destination sortante est lue par les sorties qui la servent au fur et à mesure de leur disponibilité respective dans le temps (donc en fonction de leur charge instantanée respective).

Selon une autre caractéristique de l'invention, une même sortie pouvant appartenir à plusieurs destinations sortantes, lesdits moyens de sélection de bloc de données comprennent des moyens de sélection de destination sortante pour identifier des destinations sortantes auxquelles appartient une sortie considérée, pour identifier celles de ces destinations sortantes ayant au moins un bloc de données à transférer et pour sélectionner une destination sortante parmi ces dernières destinations sortantes, l'identité de la destination sortante sélectionnée permettant alors auxdits moyens de sélection de bloc de données d'établir l'identité de la file d'attente de cette destination sortante sélectionnée.

Selon une autre caractéristique de l'invention, lesdits moyens de sélection de destination sortante sont agencés pour identifier les destinations sortantes ayant au moins un bloc de données à transférer en considérant ces destinations sortantes selon un ordre basé sur des types de destination et pour sélectionner une destination sortante parmi ces dernières destinations sortantes sur la base dudit ordre.

Selon une autre caractéristique de l'invention, lesdits moyens de sélection de destination sortante, dans le but d'identifier les destinations sortantes ayant au moins un bloc de données à transférer, comprennent un compteur par destination sortante, donnant le nombre de blocs de données à transférer pour cette destination sortante, ainsi qu'un circuit détecteur spécifiant si ce nombre est nul ou différent de zéro.

Selon une autre caractéristique de l'invention, ladite logique de gestion de files d'attente de blocs de données et de sélection de sortie comprend des moyens de sélection de sortie opérant en deux phases successives durant des intervalles de temps d'un cycle répétitif, une première phase prévue pour la réception d'une sortie individuelle demandeuse d'une indication qu'un bloc de données doit lui être affecté et une deuxième phase prévue pour la fourniture de l'identité d'une sortie sélectionnée à laquelle un bloc de données doit être affecté.

Selon une autre caractéristique de l'invention ladite identité de sortie sélectionnée fournie dans une deuxième phase est celle de ladite sortie individuelle demandeuse de la première phase immédiatement antérieure.

Toutefois, selon une variante préférée, ladite identité de sortie sélectionnée est fournie par une source d'identité de sortie sélectionnée de sorte que l'identité de sortie sélectionnée soit définie indépendamment de l'identité de ladite sortie individuelle demandeuse.

Selon une autre caractéristique de l'invention, ladite source est un compteur dont le nombre de positions utiles est égal au nombre desdits intervalles de temps et qui passe par toutes ses positions à raison d'une par intervalle de temps dans ledit cycle.

Selon une autre caractéristique de l'invention, le compteur de ladite source accomplit un ou plusieurs pas supplémentaires, en avant ou en arrière, à intervalles réguliers ou non.

Selon une autre caractéristique de l'invention, le compteur de ladite source accomplit un ou plusieurs pas supplémentaires, en avant ou en arrière, une fois dans chacun desdits cycles.

Selon une autre caractéristique de l'invention, l'accomplissement desdits pas supplémentaires est inhibé un cycle sur N, N n'étant ni multiple, ni sous-multiple du nombre d'intervalles de temps d'un cycle.

Selon une autre caractéristique de l'invention, le nombre desdits pas supplémentaires est à chaque fois fourni par une source de valeurs numériques successives à caractère aléatoire ou pseudo-aléatoire.

Selon une autre caractéristique de l'invention, en variante, ledit compteur est mis dans une position spécifiée, au début de chaque cycle.

Selon une autre caractéristique de l'invention, ladite position spécifiée est fournie à partir ou en tenant compte d'une source de valeurs numériques successives à caractère aléatoire ou pseudo-aléatoire.

Selon une autre caractéristique de l'invention, ladite source de valeurs numérique est ladite source d'identité de sortie sélectionnée.

Les différents objets et caractéristiques de l'invention seront exposés de façon plus détaillée dans le cours de la description qui va suivre d'un exemple de réalisation de l'invention, fournie à titre non limitatif, en se reportant aux figures annexées qui représentent :
- la figure 1, le diagramme connu des circuits d'un exemple de commutateur élémentaire ISE dans lequel est appliquée la présente invention,
- la figure 2, le format d'un bloc de données appelé cellule, commuté par le commutateur élémentaire de la figure 1, conformément à la présente invention,
- la figure 3, le diagramme d'un mode d'application du commutateur de la figure 1, pour l'acheminement des cellules dans deux direction opposées,
- la figure 4, le diagramme du circuit d'acheminement RL de la figure 1, permettant d'utiliser le commutateur élémentaire de la figure 1 conformément au diagramme de la figure 3,
- la figure 5, le diagramme détaillé de la logique de gestion des mémoires de sous-cellules SBML de la figure 1,
- la figure 6, le diagramme général d'un mode de réalisation de la logique de gestion de files d'attente de cellules et de sélection de sortie COQML de la figure 1,
- la figure 7, le diagramme détaillé des circuits d'un exemple de réalisation de l'unité de files d'attente OQU de la logique de gestion de files d'attente de cellules et de sélection de sortie COQML de la figure 6,
- la figure 8, le diagramme détaillé d'un mode de réalisation de la logique de sélection de sortie et de lecture de files d'attente OSQRCL de la figure 6,
- la figure 9, le diagramme d'un premier mode de réalisation du circuit de sélection de sortie OSC de la figure 8,
- la figure 10, le diagramme d'un second mode de réalisation du circuit de sélection de sortie OSC de la figure 8.

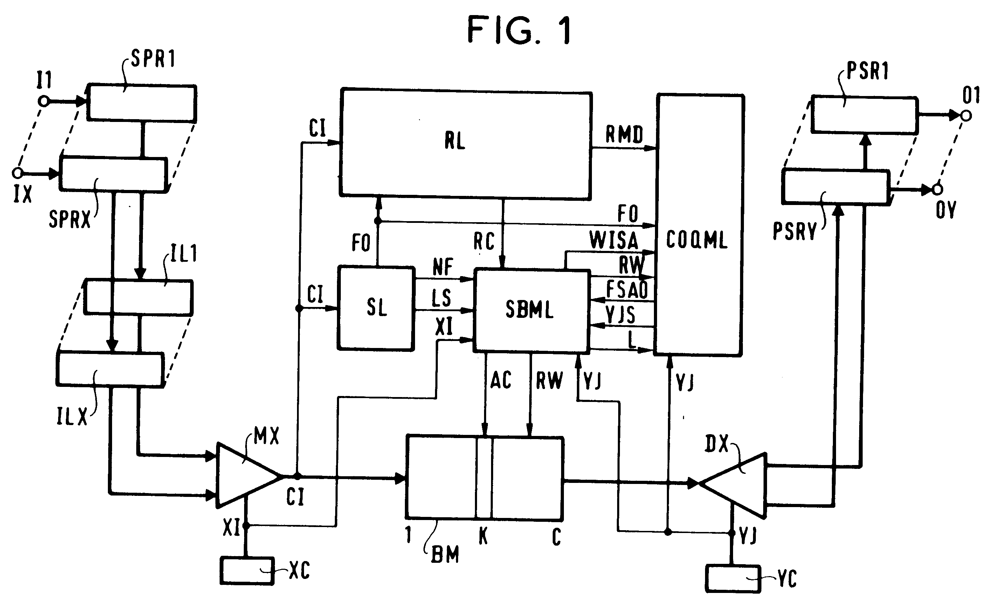

La description qui va suivre, faite en se référant aux figures annexées concerne le cas de l'application de l'invention à la commutation de blocs de données à l'aide d'un commutateur élémentaire inclus dans un réseau de commutation à plusieurs étages de tels commutateurs élémentaires. Ce commutateur élémentaire est décrit dans la demande de brevet WO-A-91/02420 publiée de 21.02.91 et il est inclus dans un réseau de commutation dont plusieurs exemples sont décrits dans la demande de brevet européen EP-A-0 446 540 publiée le 18.09.91. Les descriptions relatives aux figures 1 à 5, qui sont nécessaires à la compréhension de la présente invention, ont été largement reprises de ces demandes de brevets précédentes. Pour alléger le présent texte, elles ont été simplifiées toutes les fois que cela était possible.

Dans ces figures, encore pour simplifier, diverses connexions sont représentées comme de simples fils, bien qu'elles puissent incorporer une pluralité de tels fils. En outre, les figures ne représentent pas tous les circuits de commande, leur réalisation découlant à l'évidence, pour l'homme de métier, du contenu de la description.

Le commutateur élémentaire représenté à la figure 1 possède X entrées I1/IX et Y sorties O1/OY (X et Y n'étant pas simultanément égaux à 1). Les Y sorties appartiennent à différentes destinations sortantes. A une même destination sortante appartiennent une ou plusieurs sorties constituant un groupe de sorties. Une même sortie peut appartenir à plusieurs destinations sortantes. Cela sera détaillé plus loin.

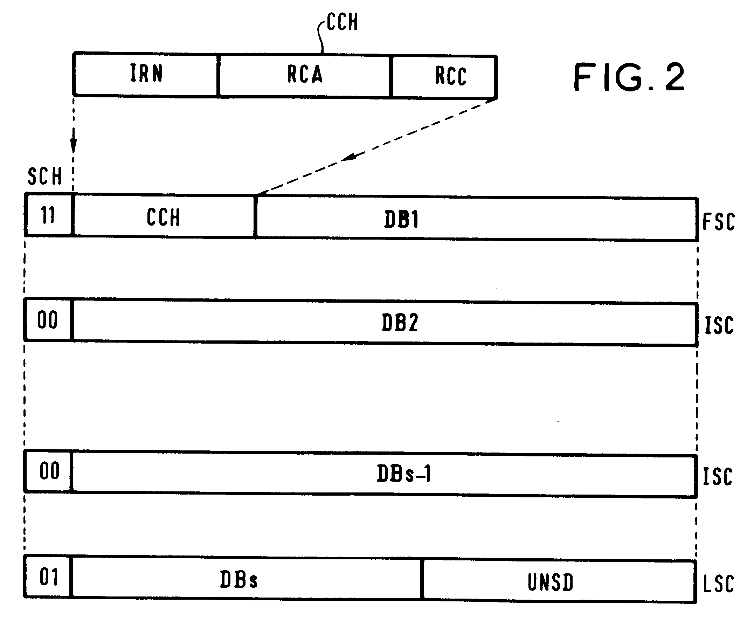

Ce commutateur élémentaire est agencé pour commuter des données numériques groupées en blocs de données de longueurs fixes ou variables. De tels blocs de données sont souvent dénommés paquets ou cellules, dans les techniques de transmission et de commutation mises en oeuvre dans la communication de données. Dans ce qui suit, adoptant le langage de la communication à multiplexage temporel asynchrone, on emploiera le mot cellules pour désigner de tels blocs de données. Un exemple de cellule acheminée par le commutateur élémentaire de la figure 1 est représenté à la figure 2. Cette cellule est constituée par une série ininterrompue de sous-cellules successives, comprenant une première sous-cellule FSC, une ou plusieurs sous-cellules intermédiaires ISC et une sous-cellule finale LSC, toutes d'égale longueur, par exemple de 162 bits, soit 2 bits et 20 caractères à 8 bits. Chacune de ces sous-cellules contient un champ de contrôle de sous-cellule SCH (de 2 bits) et un bloc de données DB1 - DBs. La première sous-cellule FSC contient de plus une étiquette de cellule CCH qui, elle-même, contient une information d'acheminement permettant au commutateur élémentaire de déterminer vers quelle(s) destination(s) sortante(s) ou groupe(s) de sorties toutes les sous-cellules appartenant à la même cellule doivent être transférées, successivement et sans interruption, ce transfert s'effectuant, dans chaque groupe de sorties, sur une même sortie. Le champ de contrôle de sous-cellule SCH a une valeur binaire explicite 11, 00 ou 01 indiquant que la sous-cellule est respectivement la première sous-cellule FSC, une sous-cellule intermédiaire ISC ou la dernière sous-cellule LSC de la cellule.

L'étiquette CCH comprend elle-même trois parties, un champ de commande d'acheminement RCC, une indication de destination sous la forme d'une adresse de sortie de réseau RCA et un numéro de référence interne d'arbre de diffusion IRN.

Le champ de commande RCC, qui peut comprendre 5 bits, contient une donnée de mode d'acheminement pouvant désigner un mode d'acheminement point à point ou un mode d'acheminement point à multipoint, ou encore tout autre mode d'acheminement prévu, dont certains seront explicités plus loin. Si, pour le commutateur élémentaire considéré, le champ de commande RCC désigne le mode d'acheminement point à point, l'analyse de l'adresse de sortie de réseau RCA fournit l'identité du groupe de sorties de destination. Si le champ de commande RCC désigne le mode d'acheminement de diffusion, le numéro de référence d'arbre de diffusion IRN sert à lire une mémoire qui fournit les identités des groupes de sorties correspondant aux branchement à effectuer pour cet arbre dans le commutateur élémentaire considéré.

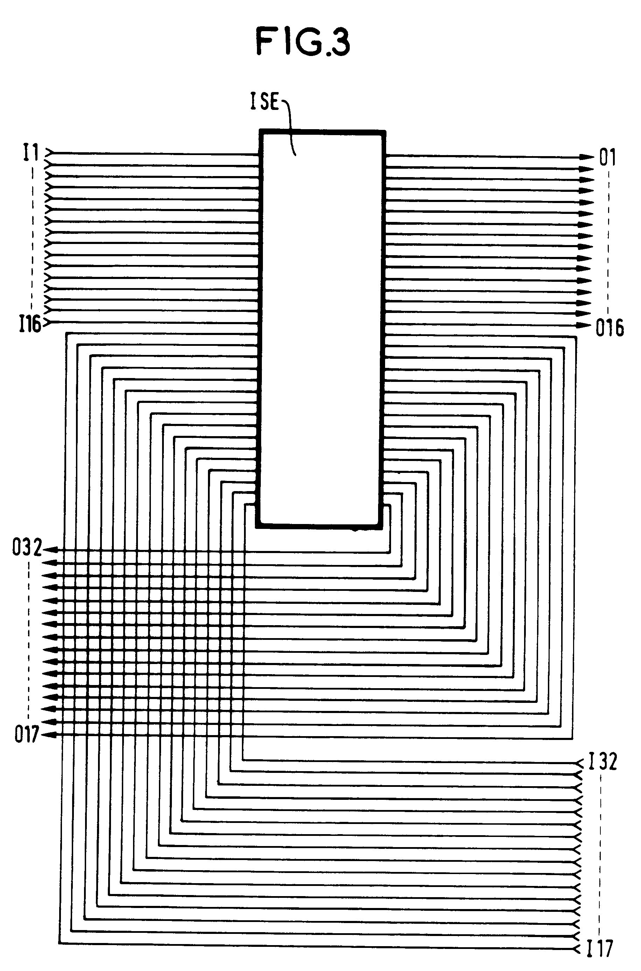

La figure 3 représente dès maintenant, pour des raisons de commodité de rédaction, un mode d'utilisation du commutateur élémentaire ISE de la figure 1 dans le cas de l'acheminement bidirectionnel, avec possibilité de réflexion.

Le commutateur élémentaire ISE, dans l'exemple de la figure 3, comporte 32 entrées I1 à I32 et 32 sorties O1 à O32. Les entrées I1 à I32 sont réparties en deux ensembles d'entrées I1 à I16 et I17 à 132. Les sorties sont réparties en deux ensembles de sorties O1 à O16 et O17 à O32. De façon interne, hors le cas de réflexion, le commutateur élémentaire est agencé pour permettre l'acheminement normal de gauche à droite, des entrées I1 à I16 vers les sorties O1 à O16, ainsi que, parallèlement, mais de droite à gauche en raison du mode de câblage externe, des entrées I17 à I32 vers les sorties O17 à O32. En cas de réflexion, le commutateur permet l'acheminement des entrées I1 à I16 vers les sorties O17 à O32, ou bien des entrées I17 à I32 vers les sorties O1 à O16. Dans un tel commutateur, l'affectation des entrées aux directions d'acheminement est prédéterminé. Il peut être indiqué par un bit IO attaché à chaque entrée et qui indique si elle appartient à un sens "entrant" (I1 à I16, par exemple, acheminant un trafic normalement destiné à l'ensemble des sorties O1 à O16) ou au sens "sortant" opposé (I17 à I32, selon le même exemple, acheminant un trafic normalement destiné à l'ensemble des sorties O17 à O32).

L'ensemble des 16 sorties de chaque direction peut être par exemple réparti en 8 groupes au plus d'au moins deux sorties affectés ainsi à 8 destinations sortantes et l'acheminement de toute cellule sur les sorties de l'un des groupes peut se faire simplement par identification, dans un mot de 8 bits (un bit par groupe) du ou des groupes sur lesquels la cellule doit être retransmise, étant entendu que la cellule est retransmise sur une seule sortie de chaque groupe ainsi identifié. Les mêmes sorties peuvent de plus appartenir toutes à une même destination sortante, ce qui permettra d'acheminer une cellule sur l'une quelconque des sorties considérées en groupe. A l'opposé, les 16 sorties peuvent encore appartenir à autant de destinations sortantes, pour permettre l'acheminement sur des sorties individuelles. On retiendra de ces exemples qui ne sont pas exhaustifs qu'une même sortie peut appartenir à plusieurs destinations sortantes.

Par ailleurs, bien que cela n'apparaisse pas sur la figure 3, le commutateur élémentaire de la figure 1 comprend une entrée et une sortie supplémentaires connectées l'une et l'autre à un équipement de test et de commande non représenté et non décrit, qui peut être réalisé de façon connue et qui sort du champ de la présente invention.

En se reportant de nouveau à la figure 1, les entrées I1/IX du commutateur élémentaire sont connectées aux entrées de données respectives d'un multiplexeur MX par l'intermédiaire de la connexion en cascade de convertisseurs série-parallèle respectifs SPR1/SPRX et de registres tampon respectifs IL1/ILX. La sortie de données CI du multiplexeur MX est couplée à l'entrée de données, également CI, d'une mémoire tampon de sous-cellules BM, de type RAM, tandis que l'entrée de sélection XI du multiplexeur MX est commandée par un circuit d'horloge d'entrée XC capable de connecter successivement chacune des X entrées du multiplexeur à la sortie de multiplexeur CI, durant une période de sous-cellule. Une telle période de sous-cellule est l'intervalle de temps durant lequel une sous-cellule est reçue sous forme série dans un circuit convertisseur série-parallèle SPR1/SPRX.

La sortie de données de la mémoire tampon BM est connectée à l'entrée de données d'un démultiplexeur DX dont les Y sorties de données sont couplées à des sorties respectives O1/OY par l'intermédiaire de circuits convertisseurs parallèle-série respectifs PSR1/PSRY. L'entrée de sélection YJ du démultiplexeur DX est commandée par un circuit d'horloge de sortie YC capable de connecter successivement l'entrée du démultiplexeur aux Y sorties de démultiplexeur au cours d'une période de sous-cellule.

La mémoire tampon BM est partagée entre toutes les entrées et toutes les sorties. Elle est subdivisée en C, 512 par exemple, emplacements de mémoire tampon de sous-cellule, chacun capable d'enregistrer une sous-cellule ; elle possède une entrée d'adresse AC, ainsi qu'une entrée de sélection lecture/écriture RW, respectivement couplées aux sorties de mêmes noms d'une logique de gestion de mémoire tampon de sous-cellules SBML.

Le commutateur élémentaire comporte de plus une logique de sous-cellule SL et une logique d'acheminement RL, qui sont toutes les deux couplées à la sortie de données CI du multiplexeur MX.

La logique de sous-cellule SL est principalement un circuit de supervision prévu pour détecter et vérifier le champ de contrôle de sous-cellule SCH de chaque sous-cellule (voir figure 2) et pour fournir des signaux de sortie actifs LS, FO ou NF, selon que la sous-cellule est respectivement une dernière sous-cellule LSC, une première sous-cellule FSC, ou n'est pas une première sous-cellule.

La logique d'acheminement RL effectue l'analyse de l'information d'acheminement de l'étiquette de cellule CCH de chaque première sous-cellule FSC d'une cellule et fournit des signaux d'acheminement de sortie actifs RMD et RC, en fonction de l'information d'acheminement. Plus particulièrement, les signaux RMD fournissent l'identité d'un ou plusieurs groupes de sorties sélectionnés sur une même sortie de chacun desquels les sous-cellules de la cellule doivent être transférées, tandis que le signal RC indique le nombre de ces groupes de sorties sélectionnés, c'est-à-dire 1 pour un transfert de point à point et une valeur supérieure à 1 pour un transfert de point à multipoint.

La logique de gestion de files d'attente de cellules et de sélection de sortie COQML effectue, à la fois, la gestion des files d'attente de cellules en sortie et la fonction de la sélection de la sortie dans un groupe de sorties. C'est dans cette logique de gestion de files d'attente COQML qu'est appliquée la présente invention.

Lors de la réception d'une première sous-cellule d'une cellule, qui est enregistrée dans la mémoire tampon BM, la logique de gestion de mémoire tampon SBML fournit à la logique de gestion de files d'attente de cellules et de sélection de sortie COQML un signal de commande d'écriture RW, accompagné de l'adresse WISA de l'emplacement de mémoire dans lequel cette première sous-cellule est enregistrée. La logique de gestion COQML, range cette adresse dans une ou plusieurs files d'attente appropriées, comme on le verra par la suite, en fonction des signaux d'acheminement de sortie RMD fournis par la logique RL, en vue de la transmission de la cellule sur une sortie d'un groupe de sorties, ou une sortie de chacun de plusieurs groupes de sorties.

Lors de la transmission de la première sous-cellule d'une cellule sur une sortie, c'est la logique de gestion de files d'attente de cellule et de sélection de sortie COQML qui identifie cette cellule en transmettant l'adresse de première sous-cellule de sortie FSAO à la logique SBML, en même temps que l'identité de la sortie sélectionnée YJS.

La logique de gestion de mémoire tampon de sous-cellules SBML est couplée aux sorties précédemment mentionnées LS, NF de la logique SL, RC de la logique RL, XI du circuit d'horloge d'entrée XC, FSAO et YJS de la logique de gestion de files d'attente de cellules et de sélection de sortie COQML, et YJ du circuit d'horloge de sortie YC. Elle gère l'utilisation des emplacements de mémoire tampon de la mémoire BM, en fournissant l'adresse d'emplacements libres, en les rendant occupés lorsqu'ils sont utilisés et en les libèrant lorsqu'ils ne le sont plus. Sous le contrôle de signaux appliqués à ses entrées, elle commande aussi, via le signal de sélection écriture/lecture RW, les cycles d'opérations de lecture et d'inscription dans la mémoire tampon BM et le fonctionnement de la logique de gestion COQML, tout en constituant des listes chaînées liant les adresses de mémoire tampon des sous-cellules d'une même cellule. Cela est nécessaire, du fait que les sous-cellules d'une même cellule sont enregistrées dans des emplacements non corrélés de la mémoire tampon BM, alors qu'elles doivent être acheminées sur la même ou les mêmes sorties sélectionnées O1/OY, et cela dans le même ordre et sans interruption, comme elles étaient à leur arrivée sur une des entrées I1/IX.

On va maintenant décrire brièvement le fonctionnement du commutateur élémentaire de la figure 1.

Lorsqu'une sous-cellule d'une cellule à longueur fixe ou variable, telle que celle qui est représentée à la figure 2, apparaît sur l'une des entrées I1/IX, I1 par exemple, du commutateur élémentaire, elle est reçue par le circuit convertisseur série-parallèle correspondant SPR1. Fournie par ce circuit convertisseur SPR1, la version parallèle de la sous-cellule est transférée au registre tampon correspondant IL1, par lequel elle est fournie au multiplexeur MX. Sous le contrôle du signal d'horloge XI fourni sur l'entrée de même nom par le circuit d'horloge d'entrée XC, la sous-cellule est, à un certain moment, correspondant à cette entrée I1, fournie à l'entrée de données CI de la mémoire tampon BM, ainsi qu'à la logique de sous-cellule SL et à la logique d'acheminement RL. Les signaux de sortie LS, NF et RC de ces deux logiques sont appliqués à la logique de gestion de mémoire tampon de sous-cellules SBML et les signaux d'acheminement de sortie RMD à la logique de gestion de files d'attente de cellules et de sélection de sortie COQML.

Sous le contrôle du signal d'horloge XI, la logique SBML fournit l'adresse WISA d'un emplacement de mémoire tampon libre à l'entrée d'adresse AC de la mémoire tampon BM, en conséquence de quoi la sous-cellule présente à l'entrée de données CI de la mémoire tampon BM est enregistrée dans l'emplacement de celle-ci, K par exemple, ayant l'adresse WISA. Cette adresse WISA est rendue occupée et est ajoutée dans la liste chaînée des adresses de toutes les sous-cellules déjà reçues de la même cellule. Dans cette liste, les adresses sont disposées dans le même ordre que celui des sous-cellules de la cellule.

Au cours d'une opération de lecture d'une sous-cellule dans la mémoire BM, pour sa transmission sur une des sorties O1 à OY du commutateur élémentaire, sous la commande du signal d'horloge YJ fourni sur l'entrée de même nom par le circuit d'horloge de sortie YC, la logique de gestion de mémoire tampon SBML fournit l'adresse de cette sous-cellule à l'entrée d'adresse AC de la mémoire tampon BM et la sous-cellule contenue dans l'emplacement de mémoire correspondant est lue et transférée à la sortie de données de la mémoire tampon BM. De là, elle est fournie, par l'intermédiaire du démultiplexeur DX à la sortie indiquée par le signal YJ.

La logique de gestion de files d'attente de cellules et de sélection de sortie COQML est informée de la réception des cellules enregistrées dans la mémoire tampon BM, ainsi que de leur(s) destination(s) ; c'est aussi elle qui, informée de la transmission d'une dernière sous-cellule d'une cellule sur une sortie, identifie une autre cellule enregistrée dans la mémoire tampon BM, qui doit être transmise ensuite sur la sortie considérée.

Parmi les différentes logiques composant le commutateur élémentaire de la figure 1, la logique de sous-cellule SL n'est qu'un simple circuit de décodage. Sa réalisation est donc à la portée de l'homme de métier et il n'est pas nécessaire d'en donner une description détaillée.

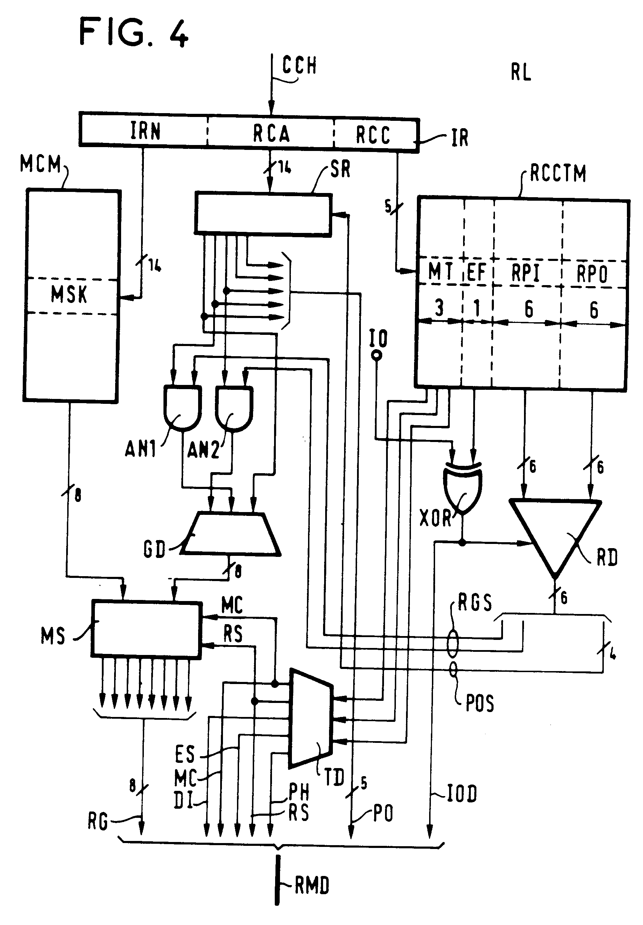

On va donc maintenant décrire, en se reportant à la figure 4, un mode de réalisation du circuit d'acheminement RL de la figure 1, permettant le fonctionnement bidirectionnel conformément à ce qui est illustré à la figure 3.

Les circuits de la figure 4 reçoivent, dans un registre IR, l'étiquette de cellule CCH mentionnée à la figure 2, pour fournir en sortie l'information marquant la liaison de commande RMD qui fournit à la logique de gestion de files d'attente de cellules et sélection de sortie COQML les informations spécifiant le mode d'acheminement sélectionné (ES, MC, DI, RS, PH), ainsi que les données d'acheminement (RG, PO).

Les informations de mode d'acheminement de la liaison RMD sont les suivantes :
- un signal de mode "groupe" RS, qui est présent lorsque la cellule doit être retransmise sur l'une des sorties d'un groupe de sorties, en cas d'acheminement de point à point,
- un signal de mode "diffusion" MC, qui est présent lorsque la cellule doit être acheminée sur l'une des sorties de chacun de plusieurs groupes de sorties, en cas d'acheminement de point à multipoint,
- un signal de mode "distribution" DI, qui est présent lorsque la cellule doit être retransmise sur l'une des sorties d'un ensemble de sorties, au sens explicité en se référant à la figure 3, dans le cas d'un commutateur élémentaire bidirectionnel, ou sur l'une de toutes les sorties du commutateur élémentaire, dans le cas d'un commutateur élémentaire unidirectionnel, en réalisant de ce fait une distribution générale,
- un signal de mode "service" ES, qui indique que la cellule reçue est destinée à une sortie particulière de commande,
- un signal de mode "transfert dirigé" PH, qui indique que la cellule doit être retransmise sur une sortie prédéterminée, pour des raisons de test, par exemple.

Les données d'acheminement de la liaison RMD comprennent :
- des signaux d'identité de groupe RG qui identifient le ou les groupes sur une sortie du ou desquels doit être retransmise la cellule reçue, pour les modes d'acheminement RS et MC,
- un signal de direction sortante IOD qui identifie l'un des deux ensembles de sorties dans le cas d'un commutateur élémentaire bidirectionnel,
- des signaux d'identité de sortie individuelle PO utilisés avec le mode d'acheminement PH.

Les circuits de la figure 4 reçoivent en outre, selon l'entrée sur laquelle est parvenue une cellule reçue, un indicateur de direction entrante IO qui est par exemple fourni par le circuit de réception fournissant la cellule dont il s'agit, sur le multiplexeur d'entrée de la figure 1, spécifiant la direction entrante concernée, au sens mentionné en se référant à la figure 3.

Les circuits de la figure 4 comprennent les éléments suivants :
- le registre IR déjà mentionné, pour recevoir l'étiquette CCH de chaque cellule reçue, qui comprend, comme indiqué, les informations RCC, RCA et IRN,
- une mémoire de traduction de commande RCCTM, enregistrant 32 mots de 16 bits, appelés paramètres d'acheminement, comprenant chacun un code de mode d'acheminement MT à trois bits, un indicateur ou bit de réflexion EF, un champ de groupe d'acheminement "entrant" RPI, à 6 bits et un champ de groupe d'acheminement "sortant" RPO, également à 6 bits,
- une mémoire de diffusion MCM, enregistrant une pluralité de mots de masque MSK à 8 bits, un bit par groupe de sorties, identifiant chacun les différents groupes d'acheminement vers lesquels une copie doit être émise,
- un décodeur de mode d'acheminement TD, décodant le code de mode d'acheminement MT et fournissant en conséquence l'un des cinq signaux de mode d'acheminement mentionnés précédemment,
- un sélecteur de direction RD sélectionnant soit le champ de groupe d'acheminement "entrant" RPI, soit le champ de groupe d'acheminement "sortant" RPO de la mémoire de traduction de commande RCCTM, en fonction du bit de réflexion EF et de l'indicateur de direction entrante IO,
- un sélecteur de groupe de sorties MS ayant deux entrées à 8 bits en parallèle et qui fournit les signaux d'identité de groupe RG, également à 8 bits, dont chacun des bits correspond à un groupe distinct parmi les 8 groupes d'acheminement possibles,
- un registre à décalage à 14 bits SR ayant une sortie PO à cinq conducteurs ; dans le cas où le mode d'acheminement est le mode "physique" PH, cette sortie identifie la sortie sur laquelle doit être acheminée la cellule reçue,
- un décodeur de groupe d'acheminement GD,
- une porte OU-exclusif XOR,
- et deux portes ET, AN1 et AN2.

Les circuits logiques d'acheminement de la figure 4 fonctionnent comme exposé ci-après, lorsque l'en-tête d'une cellule reçue est présent sur le multiplexeur d'entrée (figure 1), dont l'étiquette CCH est fournie au registre IR, tandis que le bit IO indique la direction entrante d'acheminement. Comme indiqué plus haut, une horloge rythme le fonctionnement des circuits, de façon appropriée, conformément à la pratique courante en la matière.

L'information de commande RCC, caractéristique d'une séquence de transfert à travers tout un réseau de commutation, n'indique pas directement le mode d'acheminement à appliquer dans le commutateur élémentaire considéré. Ce mode d'acheminement est fonction du type de réseau de commutation et de la position du commutateur élémentaire dans celui-ci.

L'information de commande doit être interprétée et, pour cela, elle est utilisée comme adresse pour la lecture, dans la mémoire de traduction de commande RCCTM, de paramètres d'acheminement qui y ont été inscrits précédemment par les moyens de commande classiques, tels que l'équipement de test et de commande mentionné précédemment ; ces paramètres d'acheminement comprennent les éléments MT, EF, RPI et RPO définis plus haut.

Le code de mode d'acheminement à appliquer MT est décodé par le décodeur de mode d'acheminement TD qui, en conséquence, fournit l'un des signaux de mode RS, MC, ES, DI ou PH.

L'indicateur de direction entrante IO est appliqué à une des entrées de la porte OU exclusif XOR, tandis que le bit de réflexion EF est appliqué à son autre entrée. La sortie de la porte XOR fournit le signal de commande IOD du sélecteur de direction sortante RD. Ce dernier sélectionne soit le champ de groupe d'acheminement "entrant" RPI, soit le champ de groupe d'acheminement "sortant" RPO, spécifiant, pour l'un et l'autre ensembles de sorties, une partie spécifique de l'adresse de destination RCA destinée à fournir l'identité d'un groupe d'acheminement sur une sortie duquel doit être retransmise la cellule reçue. Chacun de ces champs comprend un indicateur de position POS à 4 bits et un indicateur de dimension RGS à deux bits. L'indicateur de position POS commande le registre à décalage SR de manière que l'information RCA y soit décalée et qu'une partie de trois bits qu'elle contient vienne dans les trois étages de gauche, sur la figure, de ce registre SR, ou encore qu'une partie de cinq bits qu'elle contient vienne dans les cinq étages de gauche, sur la figure, du registre SR. L'indicateur de dimension RGS indique combien des trois bits mentionnés en premier doivent être utilisés pour définir l'identité d'un groupe d'acheminement. Ainsi, le bit de gauche de ces trois bits est-il transmis directement du registre à décalage SR au décodeur de numéro de groupe GD, le bit suivant est transmis par la porte ET AN1 conditionnée par un des signaux RGS et le troisième bit par la porte ET AN2 conditionnée par l'autre des signaux RGS. Le décodeur de numéro de groupe GD fournit un mot de 8 bits qui constitue l'identité d'un groupe d'acheminement, appliquée au sélecteur MS. Dans ce mot, un seul bit est à 1, par exemple, tous les autres étant à O.

Simultanément, le numéro de référence interne d'arbre de diffusion à 14 bits IRN est appliqué par le registre IR à la mémoire de diffusion MCM, où il sert d'adresse pour la lecture d'un mot de masque à 8 bits MSK. Comme indiqué précédemment, ce mot de masque identifie un ou plusieurs groupes d'acheminement dans un mot de 8 bits, dont un ou plusieurs sont à 1, et les autres à 0. Il est appliqué lui aussi au sélecteur MS.

Si le signal de mode d'acheminement fourni par le décodeur TD est le signal de mode "groupe" RS, le sélecteur MS fournit sur sa sortie un signal d'identité de groupe RG qui est le signal fourni par le décodeur GD ; s'il s'agit du signal de mode "diffusion" MC, le signal RG transmis par le sélecteur MS est le signal MSK.

Par ailleurs, les cinq étages de gauche du registre à décalage SR, après le décalage causé par l'indicateur de position POS, fournissent directement l'identité PO d'une sortie sur laquelle doit être retransmise la cellule reçue, dans le cas du mode d'acheminement "physique" PH.

Dans le cas particulier du mode "distribution" DI, aucun groupe de sorties n'a besoin d'être identifié, puisqu'il s'agit d'un seul groupe comprenant toutes les sorties de l'ensemble considéré dans la direction de transfert concernée.

Dans le cas du mode "service" ES, la sortie concernée est directement connue, puisque la cellule reçue est destinée une sortie supplémentaire de commande mentionnée plus haut.

On voit ainsi que l'information contenue dans la mémoire de traduction de commande RCCTM définit, dans le commutateur élémentaire, l'interprétation que ce commutateur doit faire des 32 séquences de transfert possibles désignées par l'information de commande RCC pour déterminer le mode d'acheminement à appliquer conformément aux données d'acheminement contenues dans l'étiquette de la cellule reçue. Cela revient à combiner les informations d'acheminement d'une cellule, inchangées alors que la cellule traverse des commutateurs de différents étages d'un réseau de commutation, avec les paramètres d'acheminement du commutateur élémentaire considéré, dérivés de sa position dans le réseau, par exemple propre à chaque étage et conduisant à un mode d'acheminement particulier dans chaque étage et pour chaque séquence d'acheminement.

Les informations contenues dans la mémoire de traduction de commande RCCMT sont semi-permanentes et peuvent être inscrites à la mise en service de chaque commutateur élémentaire. Par contre, les informations contenues dans la mémoire de diffusion MCM doivent être modifiées en cours d'exploitation, pour l'établissement de chaque arbre de diffusion.

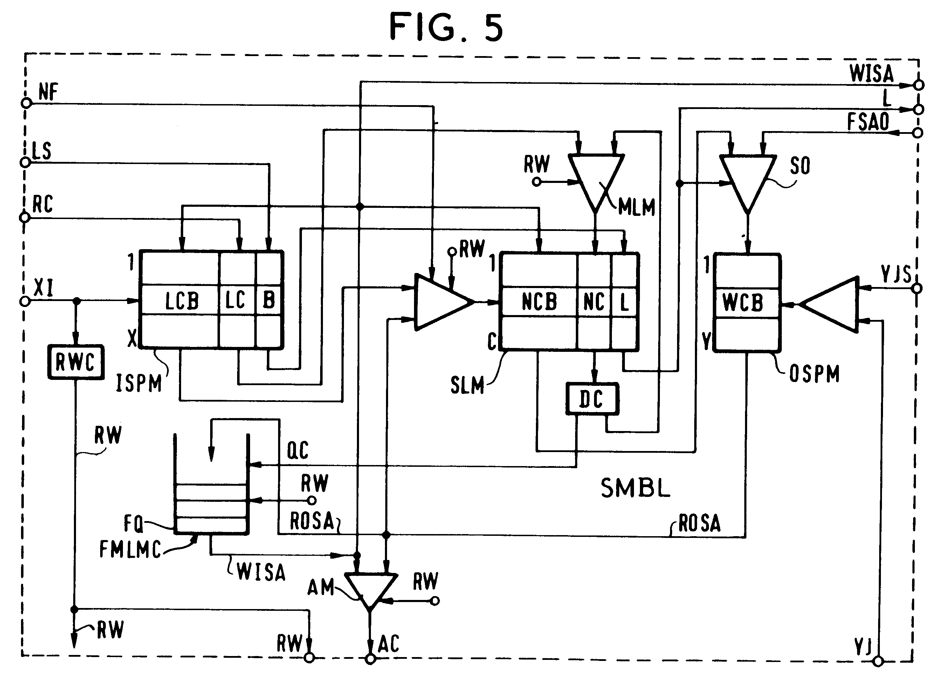

On décrira maintenant, en se reportant à la figure 5, un mode de réalisation de la logique de gestion de mémoire tampon de sous-cellules SBML de la figure 1.

Comme déjà mentionné, cette logique de gestion de mémoire tampon de sous-cellules a des entrées LS, NF, RC, XI, YJ, FSAO, YJS, et des sorties AC, L, RW et WISA. Elle comprend un circuit de gestion des emplacements de mémoire libres FMLMC, une mémoire de chaînage de sous-cellules SLM, une mémoire de pointeurs de sous-cellules entrantes ISPM et une mémoire de pointeurs de sous-cellules sortantes OSPM.

Le circuit FMLMC de la logique SBML est constitué par une mémoire de file d'attente d'emplacements libres FQ qui est par exemple une mémoire de file d'attente de type FIFO (premier entré - premier sortie) enregistrant les adresses de tous les emplacements libres de la mémoire tampon BM. Le circuit FMLMC a une entrée ROSA, une sortie WISA et des bornes de commande QC et RW.

La mémoire de chaînage de sous-cellule SLM comprend C emplacements de mémoire correspondant aux C emplacements de mémoire tampon de la mémoire tampon de sous-cellules BM et enregistre, pour chacun d'eux :
- l'adresse de chaînage à la sous-cellule suivante (NCB),
- le nombre de copies de sous-cellule qui doivent être lues (NC),
- un indicateur de dernière sous-cellule de la cellule (L).

Le champ de mémoire SLM est associé à un compteur rétrograde DC, de sorte que la valeur NC soit décrémentée d'une unité à chaque opération de lecture de la mémoire SLM ; ensuite, la nouvelle valeur est enregistrée à la place de la précédente. Bien entendu, lorsque la nouvelle valeur atteint zéro, toutes les copies de sous-cellule ont été lues et le compteur DC engendre un signal QC permettant l'enregistrement de l'adresse de la sous-cellule lue (ROSA), qui devient libre, dans le circuit de gestion d'emplacements de mémoire tampon libre FMLMC.

La mémoire de pointeurs de sous-cellules entrantes ISPM a X emplacements correspondant aux X entrées et elle fonctionne en synchronisme avec les signaux d'horloge d'entrée XI définissant l'exploitation à multiplexage temporel des X entrées. Pour chaque entrée, elle enregistre :
- l'adresse en mémoire tampon de la dernière sous-cellule reçue (LCB),
- le nombre de copies de sous-cellule qu'il faudra lire plus tard (LC),
- un indicateur de dernière sous-cellule de la cellule (B).

La mémoire de pointeurs de sous-cellules sortantes OSPM a Y emplacements correspondant aux Y sorties et elle fonctionne en synchronisme avec les signaux d'horloge de sortie YJ définissant l'exploitation à multiplexage temporel des Y sorties. Pour chaque sortie, elle enregistre l'adresse de l'emplacement de la sous-cellule suivante attendant d'être transmise sur la sortie considérée (WCB).

Un circuit de commande d'écriture/lecture RWC fournit aux divers circuits les signaux de commande appropriés déterminant le fonctionnement alterné des circuits de la logique de gestion de mémoire tampon SBML, associé aux opérations de lecture et d'écriture alternées dans la mémoire tampon BM, en conséquence des signaux d'horloge entrelacés relatifs aux entrées (XI) et aux sorties (YJ). En accord avec cela, le signal RW produit par le circuit de commande RWC est actif durant chaque opération d'écriture dans la mémoire tampon BM, pour l'entrée d'une sous-cellule, et inactif durant une opération de lecture de la mémoire tampon BM pour la transmission en sortie d'une sous-cellule.

La description de principe suivante embrasse le fonctionnement accompli par la logique de gestion de mémoire tampon SBML durant des phases alternées d'écriture et de lecture et pour chacun des trois types de sous-cellules d'une cellule : première sous-cellule FSC, sous-cellule intermédiaire ISC et dernière sous-cellule LSC.

On considérera d'abord la phase d'écriture dans la mémoire tampon BM, dans le cas d'une première sous-cellule FSC reçue sur une entrée XI. Dans un tel cas, le signal FO est fourni et la logique de gestion SBML reçoit des logiques SL et RL :
- NF = O, pour indiquer une première sous-cellule,
- LS = O, pour indiquer qu'il ne s'agit pas d'une dernière sous-cellule,
- RC = 2, en supposant par exemple le cas d'un transfert de point à multipoint sur deux groupes de sorties.

Le signal RW étant actif, une adresse d'écriture de sous-cellule WISA est fournie par le circuit de gestion FMLMC, qui désigne l'emplacement libre de mémoire tampon dans lequel est enregistrée la sous-cellule reçue. A cette fin, l'adresse WISA est transmise sur la liaison AC vers la mémoire BM (voir figure 1), par un multiplexeur d'adresses AM orienté par le signal RW. L'adresse WISA est également enregistrée dans la mémoire de pointeurs ISPM, pour l'entrée XI, afin de l'enregistrer comme adresse de dernière sous-cellule reçue, en vue du cycle suivant relatif à la même entrée. Par ailleurs, l'adresse WISA est également fournie à la logique COQML qui l'enregistrera comme identité de référence d'une nouvelle cellule reçue, du fait que cette logique reçoit le signal FO de valeur 1. Il va de soi que l'identité de référence des cellules reçues pourrait être, non pas l'adresse de la première sous-cellule de la cellule dans la mémoire tampon, dont le nombre de bits dépend du nombre d'emplacements de mémoire de la mémoire tampon BM, mais une identité de référence plus courte fournie pour chaque nouvelle cellule reçue, par un circuit de gestion d'identités de référence semblable au circuit de gestion d'emplacements de mémoire tampon libres FMLMC.

En ce qui concerne la mémoire de chaînage SLM, du fait qu'il s'agit d'une première sous-cellule FSC (NF = 0), l'adresse WISA n'est pas enregistrée dans le champ NCB, puisque cette nouvelle sous-cellule n'a pas besoin d'être chaînée avec la dernière sous-cellule de la cellule précédente. Mais, les autres champs de données doivent être et sont normalement exploités pour ce qui concerne cette sous-cellule précédente, ce qui donne lieu à la sélection de son adresse qui est fournie par le champ LCB de la mémoire de pointeurs ISPM et l'enregistrement des valeurs LC et B provenant de la mémoire de pointeurs ISPM dans les champs NC et L de la mémoire SLM respectivement, le multiplexeur MLM étant orienté en conséquence par le signal RW. Les signaux de commande RC et LS sont par ailleurs enregistrés respectivement dans les champs LC et B de la mémoire ISPM pour l'entrée XI.

Dans le cas d'une sous-cellule intermédiaire ISC, le signal FO est inactif et la logique de gestion de mémoire tampon de sous-cellules SBML reçoit des logiques SL et RL des signaux :
- NF = 1,
- LS = O,
- le signal RC n'est pas utilisé avec NF = 1.

Comme précédemment, le signal RW est actif et une autre adresse WISA est fournie par le circuit de gestion FMLMC, adresse d'emplacement de mémoire tampon qui est utilisée pour :
- adresser la mémoire tampon BM et y inscrire la sous-cellule intermédiaire ISC,
- être enregistrée dans le champ LCB de la mémoire de pointeurs ISPM comme nouvelle adresse de dernière sous-cellule reçue de la cellule,
- être enregistrée dans le champ NCB de la mémoire SLM, qui est adressé par le contenu du champ LCB de la mémoire ISPM, afin d'y inscrire cette nouvelle adresse WISA comme adresse de la sous-cellule suivante chaînée avec la précédente, à laquelle est attribué l'emplacement de mémoire sélectionné par le contenu du champ LCB dans la mémoire SLM.

Simultanément, les données des champs LC et B de la mémoire ISPM sont transférées dans les champs NC et L de la mémoire SLM, avant que B soit remplacé dans la mémoire ISPM par une nouvelle valeur venant du signal LS (le contenu du champ LC restant inchangé, puisque le nombre de copies de sous-cellule à lire est le même pour toutes les autres sous-cellules que celui qui a été établi pour la première sous-cellule de la cellule).

Dans le cas d'une dernière sous-cellule LSC, le signal FO est inactif et la logique de gestion SBML reçoit des logiques SL et RL :
- NF = 1,
- LS = 1,
- alors que RC n'est pas utilisé puisque NF = 1.

A nouveau le signal RW est actif et une autre adresse WISA est fournie par le circuit FMLMC, et l'adresse d'emplacement de mémoire tampon correspondante est utilisé dans la mémoire tampon BM, et les mémoires ISPM et SLM exactement comme dans le cas précédent de l'enregistrement d'une sous-cellule intermédiaire ISC.

Simultanément, les valeurs LC et B de la mémoire ISPM sont transférées dans les champs NC et L de la mémoire SLM avant que B soit remplacé, dans la mémoire ISPM par la nouvelle valeur venant du signal LS, indiquant par conséquent que, maintenant, la dernière sous-cellule d'une cellule vient d'être reçue.

On rappellera que, tout comme il a été souligné dans la description relative à l'enregistrement d'une première sous-cellule FSC, durant le cycle suivant relatif à l'entrée XI, les valeurs LC et B = 1 seront transférées dans les champs NC et L de la mémoire SLM à l'adresse de la sous-cellule considérée (la dernière) fournie par le champ LCB de la mémoire ISPM.

On va maintenant traiter d'une phase de lecture de la mémoire tampon BM, pour la transmission d'une sous-cellule sur une des sorties O1 à OY, phase durant laquelle le signal RW est inactif. Dans un premier temps, on considérera particulièrement le cas de la lecture d'un première sous-cellule FSC, pour le compte d'une sortie notée YJ.

Il doit être supposé que, au moment d'émettre la première sous-cellule, le contenu WCB de la mémoire de pointeurs de sous-cellules sortantes OSPM de la sortie considérée YJ a été initialisé et contient l'adresse de la première sous-cellule de la cellule à transmettre. Cela apparaîtra plus loin, lors de la lecture de la dernière sous-cellule de la cellule.

La mémoire de pointeurs OSPM adressée par l'identité de sortie YJ fournit par suite l'adresse notée ROSA de la sous-cellule sortante à lire, qui est utilisée pour :
- adresser la mémoire tampon BM pour la lecture de la première sous-cellule correspondante FSC, le multiplexeur AM étant orienté vers le signal ROSA par le signal RW inactif et fournissant en conséquence ce signal ROSA sur la liaison AC,
- sélectionner la mémoire SLM en lecture, ce qui fournit :
   - une indication NCB qui est transférée à la mémoire OSPM pour enregistrement comme nouvelle adresse WBC, en vue du cycle suivant relatif à la sortie YJ, le multiplexeur SO étant orienté en conséquence sous l'effet du signal L, tant qu'il ne s'agit pas d'une dernière sous-cellule,
   - une indication NC qui est décrémentée d'une unité et réenregistrée comme nouvelle indication NC, si elle n'est pas nulle ; si la valeur zéro est obtenue, ce qui signifie que le nombre voulu d'opérations de lecture de cette sous-cellule (fournissant le nombre voulu de copies de celle-ci) a été effectué, le circuit DC engendre un signal QC permettant au circuit FMLMC d'enregistrer que l'emplacement de mémoire tampon d'adresse ROSA peut être libéré et inclus dans l'ensemble des emplacements de mémoire tampon libres;
   - une valeur L qui est égale à zéro puisqu'il ne s'agit pas de la dernière sous-cellule de la cellule et qui commande le transfert précédemment mentionné de la valeur NCB de la mémoire SLM au champ WCB de la mémoire OSPM, via le multiplexeur SO.

Dans le cas d'une sous-cellule intermédiaire ISC, les mêmes opérations ont lieu dans les mémoires OSPM et SLM et dans le circuit FMLMC que pour la lecture d'une première sous-cellule FSC.

Dans le cas d'une dernière sous-cellule LSC, la mémoire OSPM fournit à nouveau l'adresse ROSA de la sous-cellule à émettre, qui est utilisée pour :
- adresser la mémoire tampon BM pour la lecture de la dernière sous-cellule,
- sélectionner la mémoire SLM en lecture, ce qui fournit :
   - une valeur NC qui est décrémentée et traitée exactement comme dans les autres cas de lecture de sous-cellule,
   - une valeur L, maintenant égale à 1, indiquant que l'on est en présence d'une dernière sous-cellule LSC, ce qui, dans ce cas particulier, interdit le transfert de la valeur NCB de la mémoire SLM à l'emplacement WCB de la mémoire OSPM, puisqu'il n'y a aucune sous-cellule suivante pour la cellule considérée ; à la place, L = 1 est fourni à la logique COQML pour indiquer que la sortie considérée YJ devient disponible pour l'envoi d'une cellule suivante, dès le prochain cycle, une dernière sous-cellule d'une cellule étant en cours d'envoi.

Ensuite, après sélection par la logique COQML de la cellule appropriée qui doit être transmise sur la sortie considérée YJ, la logique COQML initialise la valeur WBC dans la mémoire OSPM pour ce qui concerne la sortie YJ, en y inscrivant l'adresse d'emplacement de mémoire tampon de la première sous-cellule FSAO de la nouvelle cellule sélectionnée, avant le prochain cycle concernant la sortie YJ. Du fait que ce processus d'initialisation n'est pas nécessairement réalisé au cours de la période d'horloge YJ de la dernière sous-cellule LSC, un accès asynchrone à la mémoire OSPM est utilisé, au moyen de l'adresse de sortie YJS fournie par le logique COQML.

Alors que cet exemple de réalisation de la logique de gestion de mémoire tampon de sous-cellules SBML a été décrit pour illustrer les principes de la gestion de la mémoire tampon de sous-cellules employée pour le transfert de cellules composées de sous-cellules entre toute entrée et toute sortie (ou sorties) du commutateur élémentaire, d'autres modes de réalisation des fonctions de cette logique de gestion SBML, par exemple en ce qui concerne le circuit de gestion d'emplacements de mémoire tampon libres FMLMC, sont également inclus dans des types de commutateurs élémentaires auxquels s'applique la présente invention.

Il convient maintenant de revenir à la figure 1, pour considérer particulièrement la logique de gestion de files d'attente de cellules et de sélection de sortie COQML. Des descriptions qui précèdent, il est apparent que cette logique de gestion COQML a pour fonction :
a) de recevoir, à la réception de toute première sous-cellule d'une cellule, signalée par le signal FO actif, une identité de référence qui est, dans l'exemple décrit, l'adresse WISA d'enregistrement de cette première sous-cellule, accompagnée des signaux d'acheminement RMD qui désignent un groupe de sorties au moins, sur une sortie de chacun desquels la cellule devra être transmise,
b) de fournir, lorsque la transmission d'une cellule sur une sortie quelconque YJ est en passe de se terminer, ce qui lui est signalé par le signal L, l'identité de référence FSAO d'une nouvelle cellule à transmettre sur cette sortie, qui est, comme mentionné en a) ci-dessus, l'adresse d'enregistrement de la première sous-cellule de cette cellule dans la mémoire tampon BM ; en outre, la logique de gestion COQML qui a noté l'identité de la sortie en cause, notée YJ, fournit en retour cette même identité, notée YJS, de sorte que sa réponse peut être différée par rapport au traitement synchrone de la sortie YJ.

En d'autres termes, l'enregistrement en mémoire tampon de chacun des blocs de données, que sont les cellules acheminées par le commutateur élémentaire de la figure 1, est signifié, avec leur(s) destination(s) sortante(s) à la logique de gestion de files d'attente de cellules et de sélection de sortie COQML ; cette dernière en prend note et, à partir de cette information, répond aux demande de sorties individuelles servant les directions sortantes, en fournissant à chacune d'elles l'identité d'un bloc de données qui peut être transmis sur cette sortie individuelle.

Comme exposé dans le préambule de la présente demande, cela permet de mettre des bloc de données affectés à une ou des destinations sortantes déterminées à la disposition, à chaque fois, d'une des sorties multiples appartenant à chacune de ces destinations sortantes déterminées.

La logique de gestion de files d'attente de cellules et de sélection de sortie COQML pourrait, selon des solutions connues, se borner à attribuer d'emblée chaque bloc de données à une des sorties de chaque destination sortante auxquelles il est affecté, une file d'attente étant alors prévue par sortie.

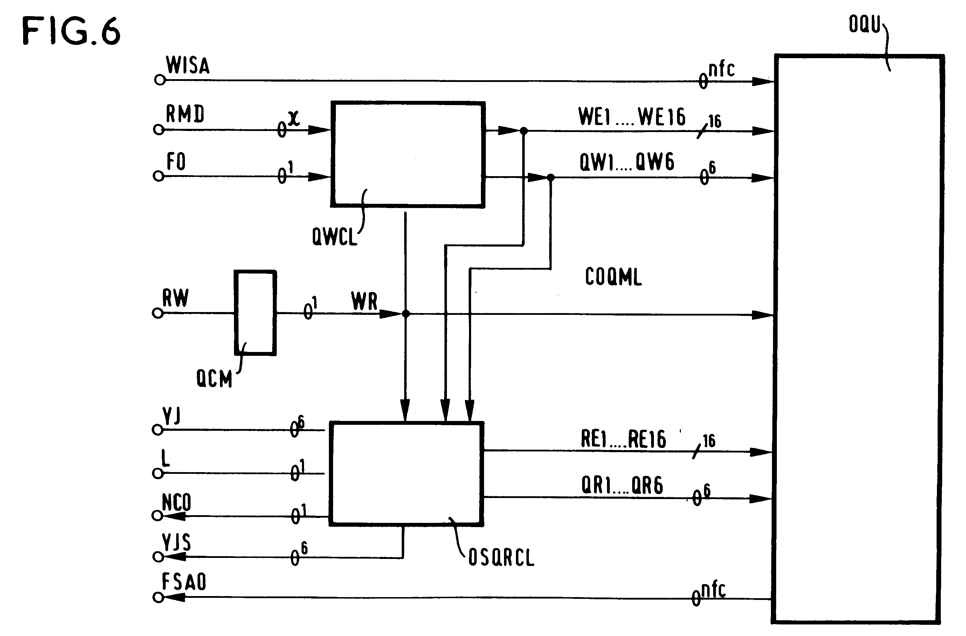

L'invention préconise une autre solution, plus performante, dont on va maintenant donner un exemple de réalisation en se référant aux figure 6 à 9.

La figure 6 représente la logique de gestion de files d'attente de cellules et de sélection de sortie COQML dans ses lignes les plus générales. On voit que cette logique de gestion comprend une logique de commande d'écriture en files d'attente QWCL, une logique de commande de sélection de sortie et de lecture en files d'attente OSQRCL et une unité de files d'attente de sortie OQU. Le fonctionnement d'ensemble de la logique de gestion de files d'attente de cellules et de sélection de sortie COQML est commandé par un module d'horloge QCM commandé par le signal RW (figure 1). Le module QCM, en réponse au signal RW, fournit à la logique de gestion de files d'attente de cellules et de sélection de sortie COQML divers signaux d'horloge, dont le signal WR, qui commandent l'exécution alternée des phases d'écriture et de lecture en files d'attente, selon les descriptions qui vont suivre, en application de techniques bien connues de l'homme de métier.

La logique de commande d'écriture QWCL fonctionne en réponse au signal WR actif et sur instruction du signal de commande FO, lequel, on le rappelle, caractérise la réception d'une première sous-cellule d'une cellule, ce qui entraîne la nécessité d'enregistrer une identité de référence de cette cellule dans une file d'attente agencée pour permettre sa retransmission sur une ou plusieurs des sorties de l'élément de commutation de la figure 1. Cette identité de référence est l'adresse WISA d'enregistrement de cette première sous-cellule dans la mémoire tampon du commutateur élémentaire. Elle est accompagnée des signaux d'acheminement RMD. En fait, le rôle de la logique de commande d'écriture QWCL est simplement de traduire ces signaux d'acheminement RMD qui sont fournis par le circuit d'acheminement RL sur un groupe de x conducteurs et définissent la ou les destinations de la cellule, en termes de groupes de sorties, la cellule devant être transmise sur une sortie de chaque groupe de sorties ainsi désignées. Selon le mode d'acheminement sélectionné, l'identité de la cellule doit être mise dans une seule ou dans plusieurs files d'attente de sortie, une par destination, le cas où il s'agit de plusieurs files d'attente de sortie correspondant au mode "diffusion" MC dans lequel la cellule doit être acheminée sur l'une des sorties de plusieurs groupes de sorties (8, ou 16 au maximum, dans l'exemple considéré, selon que le commutateur élémentaire est bidirectionnel ou unidirectionnel; comme expliqué auparavant). Pour pouvoir effectuer la mise en file d'attente d'une cellule simultanément dans autant de files d'attente, cette traduction fournit un ou plusieurs signaux sur 16 conducteurs WE1 à WE16 qui commandent l'écriture en parallèle dans les unités de mémoire de sortie concernées RGM1 à RGM16 de l'unité de files d'attente OQU comme expliqué plus loin. Dans l'exemple de réalisation considéré, les files d'attente sont constituées par les listes chaînées en mémoire de sortie, dont chaque ligne, adressée par une identité de cellule, contient l'identité de la cellule suivante dans la file d'attente ; une même mémoire de sortie peut donc contenir plusieurs listes chaînées (plusieurs files d'attente), tant que celles-ci sont exclusives, c'est-à-dire tant que chaque identité de cellule n'appartient qu'à une seule file d'attente de cette mémoire de sortie. Ainsi, comme expliqué plus loin, les 35 autres files d'attente suivantes se trouvent également dans la première unité de mémoire de sortie RGM1, dans l'exemple considéré :
- 32 files d'attente de "transfert dirigé" vers une sortie individuelle,
- 1 file d'attente de "service" vers la 33^{ème} sortie pour test et commande,
- 2 files d'attente de "distribution", une par ensemble de sorties par direction sortante (une seule d'entre elles étant utilisée dans le cas d'un commutateur unidirectionnel).

Pour désigner la file d'attente particulière dans l'unité de mémoire de sortie RGM1, son identité est codée sur 6 conducteurs additionnels QW1 à QW6.

De façon générale, on va voir que, selon l'invention, chacune de ces files d'attente correspond à une destination sortante.

En bref, donc, la logique d'écriture QWCL prend soin des entrées de cellules dans les files d'attente de sortie de l'unité de files d'attente OQU. Elle effectue une simple traduction et peut prendre la forme classique d'un transcodeur à mémoire ; on ne la décrira pas en détail.

La logique de sélection de sortie et de lecture de files d'attente OSQRCL fonctionnant lorsque le signal WR est inactif, reçoit l'identité d'une sortie YJ, codée sur 6 conducteurs, qui signale (signal L) qu'elle va transmettre la dernière sous-cellule d'une cellule et demande que lui soit affectée une cellule suivante. Cette sortie appartient à un ou plusieurs groupes de sorties et les sorties de chaque groupe servent collectivement une destination sortante.

Dans une première forme de réalisation, la logique OSQRCL réagit immédiatement et exécute de façon synchrone la sélection de file d'attente pour la sortie YJ. A cette fin, elle identifie les destinations sortantes dont fait partie la sortie considérée, recherche, parmi les destinations sortantes de cette sortie, celles dont les files d'attente ne sont pas vides, en choisit une et fournit son identité en marquant des conducteurs RE1 à RE16 et QR1 à QR6 qui sont les homologues, pour la lecture, des conducteurs WE1-WE16 et QW1-QW6, pour l'écriture. Compte tenu du signal WR inactif, l'unité de files d'attente de sortie OQU lit la file d'attente désignée et fournit l'identité de cellule recherchée, FSAO, qui est comme précédemment pour l'identité de référence WISA, par exemple l'adresse d'enregistrement de la première sous-cellule de la cellule dans la mémoire tampon du commutateur élémentaire. Ces deux adresses sont présentées sur un nombre nfc de conducteurs correspondant au nombre de bits des adresses d'enregistrement en question. Par ailleurs, la logique OSQRCL fournit aussi un signal NCO indiquant la présence d'une identité de référence de cellule à transmettre FSAO, ainsi que l'identité YJS de la sortie en cause. Comme indiqué, les identités de sortie (32 sorties de communication plus une sortie de service dans l'exemple considéré) sont codées sur 6 conducteurs. La fourniture de l'identité de sortie YJS pourrait être supprimée dans ce premier exemple, car elle est identique à l'identité YJ. On ne l'a mentionnée que pour être complet.

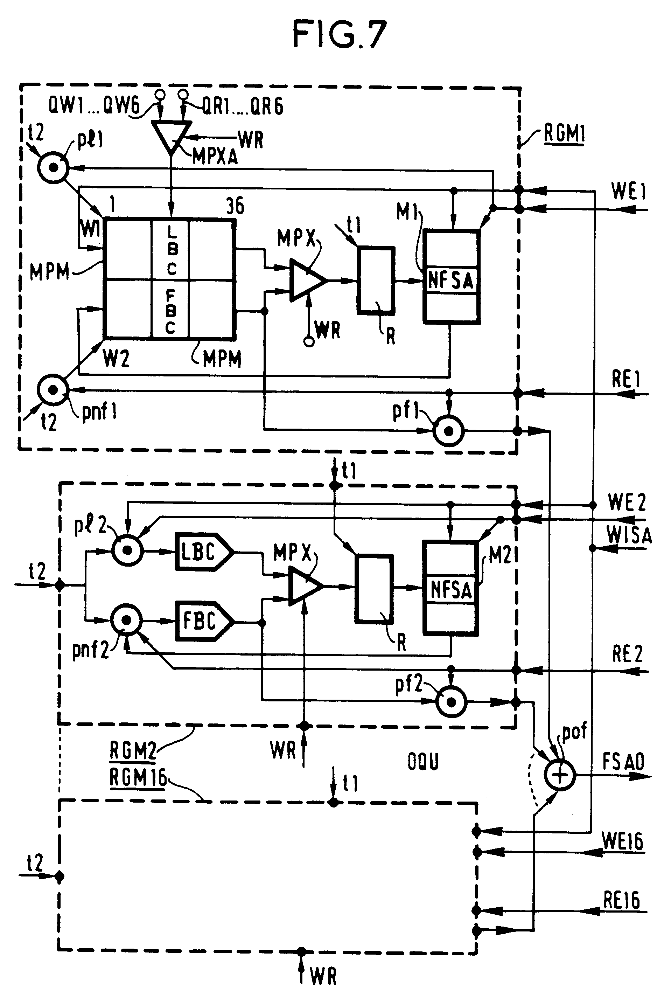

On notera qu'en décrivant les fonctions des deux logiques QWCL et OSQRCL, on a également défini en termes généraux les fonctions de l'unité de files d'attente OQU. On en donnera une description plus détaillée un peu plus loin en se référant à la figure 7.

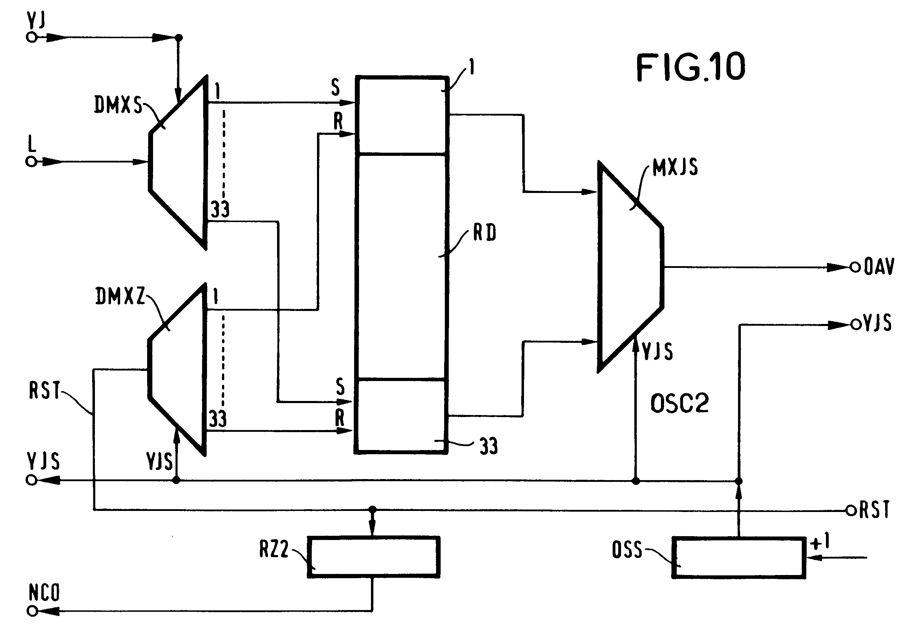

Dans une deuxième forme générale de réalisation, la sélection de file d'attente pour la sortie YJ est différée, donc asynchrone par rapport à l'intervalle de temps de l'horloge de sortie affecté à la sortie YJ. La logique OSQRCL, après avoir reçu la demande de cellule à transmettre d'une sortie YJ ne réagit pas immédiatement à son profit. La demande est seulement enregistrée. Plus tard, après que d'autres demandes similaires aient éventuellement été reçues d'autres sorties, la logique OSQRCL effectue un choix parmi les demandes enregistrées, dans des conditions qui seront explicitées plus loin dans la description relative à la figure 10. Ce choix désigne une sortie dont la demande est alors satisfaite. A cette fin, comme dans la première forme de réalisation considérée, la logique OSQRCL identifie les destinations sortantes dont fait partie la sortie considérée, recherche, parmi les destinations sortantes de cette sortie, celles dont les files d'attente ne sont pas vides, en choisit une et fournit son identité à l'unité de files d'attente OQU, laquelle lit la file d'attente désignée et fournit l'identité de cellule recherchée. Par ailleurs, la logique OSQRCL fournit aussi un signal NCO indiquant la présence d'une identité de référence de cellule à transmettre FSAO, ainsi que l'identité YJS de la sortie en cause, codées sur 6 conducteurs. La fourniture de l'identité de sortie YJS est alors nécessaire, pour indiquer à la logique SBML sur quelle sortie doit être transmise la cellule désignée, puisque l'on n'est plus dans l'intervalle de temps synchrone affecté en émission à cette sortie.

L'intérêt de cette deuxième forme de réalisation plus générale consistant à ne pas servir les files d'attente de sortie au fur et à mesure de la disponibilité de chaque sortie est de pouvoir éviter que les files d'attente soient servies par les sorties dans un ordre directement corrélé avec le trafic de cellules écoulé précédemment. Pour cela, on introduira par exemple une décorrélation sur l'écoulement du trafic dans chaque groupe de sorties en effectuant un choix aléatoire, ou pseudo-aléatoire de l'ordre dans lequel les différentes sorties ayant formulé une demande de cellule vont servir les files d'attente de sortie, durant un intervalle de temps correspondant au cycle à multiplexage temporel du traitement de l'ensemble des sorties du commutateur élémentaire.

Avant de donner une description détaillée de la logique de sélection de sortie et de lecture de files d'attente OSQRCL, on se tournera d'abord vers la figure 7 représentant une forme de réalisation de l'unité de files d'attente OQU.

Cette unité de files d'attente est essentiellement composée d'unités de mémoire de sortie RGM1 à RGM16. Les unités de mémoire de sortie RGM2 à RGM16 sont identiques entre elles et seule l'unité RGM2 est illustrée en détail ; elle contiennent chacune une file d'attente de sortie dans une mémoire de sortie, M2 pour l'unité de mémoire de sortie RGM2. L'unité de mémoire de sortie RGM1 est différente. Elle contient 36 files d'attente de sortie dans une même mémoire de sortie M1.

Ces chiffres renvoient à l'exemple de commutateur élémentaire de la figure 3 et à la description qui s'y rapporte. Dans cet exemple, le commutateur élémentaire possède 32 sorties, en deux ensembles de 16 sorties et ces sorties peuvent être groupées en 16 (2 fois 8) groupes de sorties à une ou plusieurs sorties correspondant chacun à une destination sortante. Comme, dans le cadre des communications de point à multipoint, une cellule entrante peut être copiée sur plusieurs destinations sortantes, comme de plus une cellule est désignée par une seule identité de référence et comme enfin il est souhaitable pour des raisons de temps opératoire de procéder à la mise en file d'attente des différentes copies éventuelles de cellule en parallèle, il s'ensuit qu'il est nécessaire de prévoir une mémoire de sortie autonome pour chacune de ces files d'attente de sortie, ce qui conduit aux 16 mémoires de sortie de la figure 7. En dehors de cela, les 32 sorties de trafic et la sortie de maintenance doivent pouvoir être atteintes individuellement, ce qui représente 33 destinations sortantes, donc demande 33 files d'attente supplémentaires. Mais du fait de cet accès individuel, on peut dire que l'inscription d'une cellule dans une de ces 33 files d'attente de sortie exclut son inscription dans toute autre file d'attente. Il en résulte que ces files d'attente peuvent être implantées dans une même mémoire de sortie et que celle-si peut en outre être d'une des 16 mémoires de sorties précédemment mentionnées. Cette mémoire de sortie est la mémoire M1 de l'unité RGM1. Finalement, comme indiqué prédédemment, les deux ensembles de 16 sorties constituent chacun un groupe de sorties, doté d'une file d'attente, et l'inscription d'une cellule dans l'une de ces files d'attente exclut de même l'inscription de la cellule dans toute autre file d'attente. La conséquence en est que ces deux files d'attente de sortie ont également été implantées dans la mémoire M1 qui contient ainsi au total 36 files d'attente de sortie.

On examinera d'abord, cas le plus simple, l'unité de file d'attente RGM2. Elle comprend, on l'a déjà mentionné, la mémoire M2, ayant autant d'emplacements de mémoire que d'identités de cellule différentes ; dans l'exemple de cette description, l'identité de cellule est caractérisée par l'adresse de sa première sous-cellule dans la mémoire tampon BM (figure 1), donc la mémoire de sortie M2 comprend autant d'emplacements que cette dernière, chaque emplacement de la mémoire M2 pouvant enregistrer l'adresse de l'emplacement de la mémoire BM correspondant à la première sous-cellule de la cellule suivante de la liste chaînée constituant la file d'attente. Elle comprend en outre un pointeur de première cellule FBC, un pointeur de dernière cellule LBC, ainsi que diverses portes, un multiplexeur MPX et un registre R. On se reférera aussi à la description d'ensemble de la logique de gestion de files d'attente de cellules et de sélection de sortie COQML, pour ce qui est des connexions d'entrée et de sortie.

Pour l'inscription en file d'attente d'une cellule, l'horloge QCM (figure 6) produit le signal WR actif, et, durant ce signal une impulsion t1, suivie d'une impulsion t2. Le multiplexeur MPX est orienté par le signal WR de manière que le contenu du pointeur de dernière cellule LBC soit transféré vers le registre d'adresse R. Durant l'impulsion t1, le registre R est chargé de cette adresse et adresse en écriture la mémoire M2. La mémoire M2 est validée en inscription par le signal WE2 spécifiant que l'adresse WISA doit être liée dans la file d'attente de sortie de l'unité de file d'attente de sortie RGM2. Cette adresse WISA qui est l'identité de référence de la cellule, c'est-à-dire l'adresse WISA d'enregistrement de la première sous-cellule de la cellule dans la mémoire tampon BM de la figure 1, est inscrite dans la mémoire M2. Durant l'impulsion t2, la porte p12 est ouverte, du fait que le signal WE2 est présent, de sorte que l'adresse WISA vient s'inscrire dans le pointeur de dernière cellule LBC. C'est ainsi que, d'une manière générale, à l'inscription, l'identité de référence de chaque cellule est chaînée dans une file d'attente de sortie sélectionnée, par enregistrement dans un emplacement de la mémoire de sortie dont l'adresse correspond à l'identité de la dernière cellule chaînée de l'identité de la cellule incidente, identité qui est ensuite inscrite dans le pointeur de dernière cellule, en vue du chaînage de la cellule suivante.

On notera que l'inscription de l'adresse WISA a lieu identiquement en même temps dans toute autre unité de mémoire de sortie également sélectionnée (à quelques différences de détail près pour ce qui concerne l'unité RGM1).

Pour la lecture de l'identité de référence d'une cellule, qui est l'adresse d'enregistrement de la première sous-cellule de la cellule, le signal RE2 spécifiant que l'identité de référence de cellule demandée doit être lue dans l'unité de mémoire de sortie RGM2, ouvre une porte pf2, laquelle transmet le contenu du pointeur de première cellule FBC comme identité de référence FSAO. Le signal WR est inactif, mais les impulsions t1 et t2 sont engendrées comme pour l'inscription. Le multiplexeur MPX est orienté vers le pointeur de première cellule FBC, de sorte que l'impulsion t1 charge le contenu de ce pointeur dans le registre d'adresse R qui adresse alors en lecture la mémoire M2 (le signal WE2 étant inactif). Le contenu de l'emplacement lu, indiqué par NFSA sur la figure 7, est l'identité de référence de cellule suivante, dans la file d'attente. L'impulsion t2 ouvre alors la porte pnf2, validée par le signal RE2, de sorte que l'information NFSA vient s'inscrire dans le pointeur de première cellule FBC, à la place de l'adresse FSAO transmise, pour devenir plus tard une adresse FSAO, en réponse à la demande d'identité de référence suivante concernant la mémoire de sortie M2. C'est ainsi que, d'une manière générale, à la lecture, l'identité de référence de la première cellule est fournie par le pointeur de première cellule chaînée dans une file d'attente de sortie sélectionnée, et sert à la lecture, dans un emplacement de la mémoire de sortie, dont l'adresse correspond à l'identité de la première cellule chaînée, de l'identité de la cellule suivante, identité qui est ensuite inscrite dans le pointeur de première cellule, en vue de la fourniture de l'identité de référence de la cellule suivante dans la file d'attente.

Les autres unités de mémoire de sortie, de RGM3, non représentée, jusqu'à RGM16 sont identiques et répondent similairement aux signaux de sélection WE3 à WE16 et RE3 à RE16, aux impulsions d'horloge WR, t1, t2, à l'adresse WISA et fournissent l'adresse FSAO, par l'intermédiaire d'une porte OU pof.

L'unité de mémoire de sortie RGM1 est semblable a celles que l'on vient de décrire, si ce n'est qu'elle contient 36 files d'attente de sortie au lieu d'une. Pour le faire clairement apparaître, les éléments identiques ont conservé les mêmes références. Pour les 36 listes chaînées de ces 36 files d'attente, 36 pointeurs de première cellule et 36 pointeurs de dernière cellule sont nécessaires. Ils sont enregistrés dans une mémoire de pointeurs MPM qui comprend 36 emplacements, chacun d'eux contenant, comme indiqué, le pointeur de première cellule FBC et le pointeur de dernière cellule LBC d'une même file d'attente. Cette mémoire est adressée soit par les signaux QW1-QW6, soit par les signaux QR1-QR6, par l'intermédiaire d'un multiplexeur d'adresse de pointeur MPXA, selon que le signal WR et actif ou inactif. Les signaux W1 et W2 étant inactifs, cet adressage opère en lecture et le contenu de l'emplacement adressé est fourni sur les deux sorties de la mémoire MPM. Ces deux sorties de la mémoire MPM correspondent exactement aux sorties des deux registres de pointeurs de l'unité RGM2, de sorte que l'on trouve ensuite identiquement un multiplexeur MPX, un registre d'adresse R validé par l'impulsion t1, avant la mémoire de sortie M1.

En inscription d'identité de référence de cellule en file d'attente, la porte pl1 joue un rôle similaire à celui de la porte pl2 dans l'unité RGM2. Elle fonctionne au même moment sous l'effet de l'impulsion d'horloge t2, quand l'unité de mémoire de sortie RGM1 est sélectionnée par le signal WE1. Elle fournit alors le signal W1, ce qui valide la mémoire MPM en écriture. L'information WISA est inscrite dans l'emplacement désigné par les signaux QW1-QW6, et plus particulièrement dans la partie de cet emplacement correspondant au pointeur de dernière cellule LBC, le contenu de la partie correspondant au pointeur de première cellule FBC étant préservé.

En lecture d'identité de référence de cellule, la porte pf1 joue exactement le même rôle que la porte pf2 de l'unité RGM2, transmettant le contenu du pointeur de première cellule FBC de l'emplacement de la mémoire MPM adressé en lecture par les signaux QR1-QR6, du moment que l'unité RGM1 est sélectionnée par le signal RE1. Ensuite, la porte pnf1 joue un rôle similaire à celui de la porte pl2 dans l'unité RGM2. Elle fonctionne au même moment sous l'effet de l'impulsion d'horloge t2, quand l'unité de mémoire de sortie RGM1 est sélectionnée par le signal RE1. Elle fournit alors le signal W2, ce qui valide la mémoire MPM en écriture. L'information NFSA lue dans la mémoire M1 est inscrite dans l'emplacement désigné par les signaux QR1-QR6, et plus particulièrement dans la partie de cet emplacement correspondant au pointeur de première cellule FBC, le contenu de la partie correspondant au pointeur de dernière cellule LBC étant préservé.

Il est bien sûr évident que d'autres structures de files d'attente que celles de la figure 7 pourraient tout aussi bien être employées aux mêmes fins et que celles qui viennent d'être décrites ne représentent qu'un exemple parmi d'autres à cet égard. En particulier, on pourrait envisager d'utiliser une seule mémoire de sortie pour contenir toutes les files d'attente. L'inscription d'une même cellule dans plusieurs files d'attente se ferait alors dans des cycles d'inscription successifs. De plus, pour que les listes chaînées des différentes files d'attente ne soient pas "mélangées" en cas de transfert de cellule de point à multipoint, il faudrait pouvoir distinguer les identités de référence des emplacements d'enregistrement de sous-cellule de la mémoire tampon du commutateur élémentaire, comme on l'a déjà envisagé précédemment et pour cela attribuer une identité de référence différente à chacune des copies d'une même cellule affectée à une destination sortante particulière.

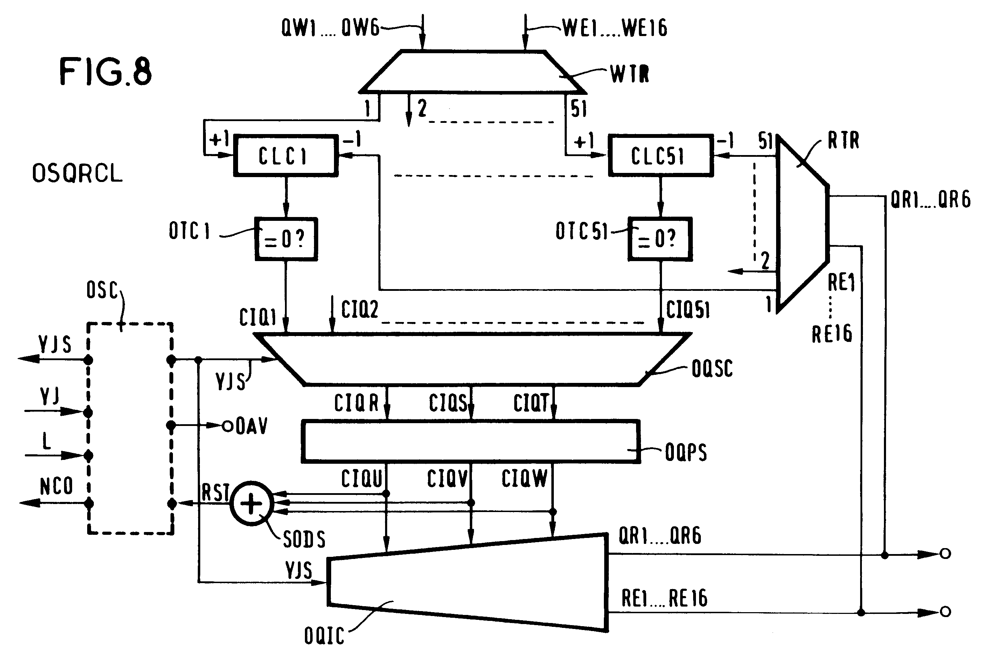

Une forme de réalisation de la logique de sélection de sortie et de lecture de files d'attente OSQRCL est représenté à la figure 8. Comme précédemment décrit, cette logique OSQRCL reçoit l'identité d'une sortie YJ, accompagnée du signal L, qui indique que débute sur cette sortie la transmission de la dernière sous-cellule d'une cellule, et par conséquent qu'une nouvelle cellule doit être affectée à cette sortie. Le rôle de la logique OSQRCL est de sélectionner une file d'attente d'un groupe de sorties que sert cette sortie, en fournissant les signaux de lecture de file d'attente RE1-RE16 et QR1-QR6 qui la désigne, vers l'unité de files d'attente de la figure 7, laquelle fournira en réponse l'identité de référence FSAO (figure 6 et 7) d'une cellule. Au même instant, la logique OSQRCL fournit l'identité YJS de la sortie à laquelle est affectée la cellule en question, accompagnée du signal NCO.

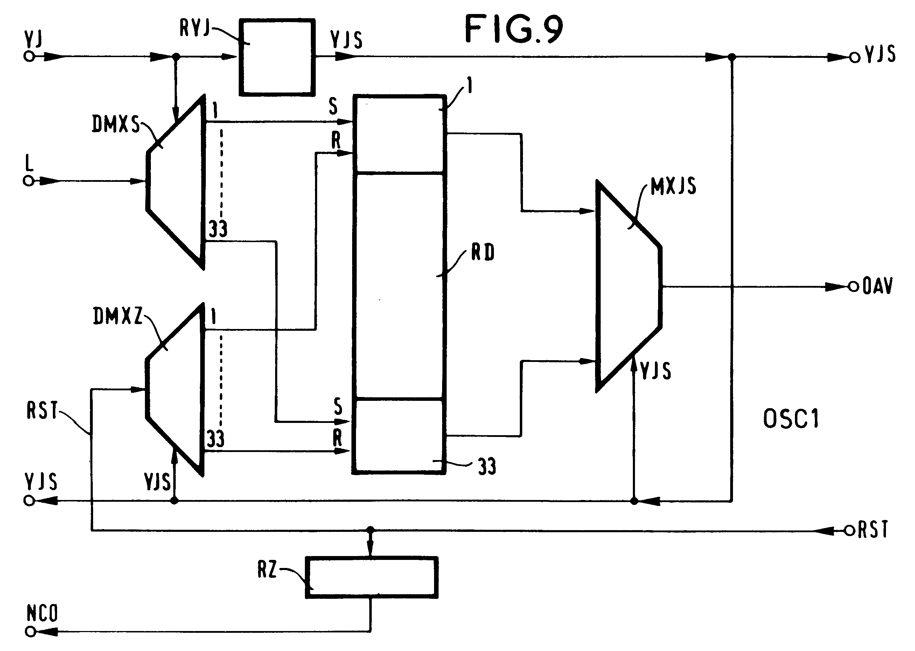

La logique OSQRCL comprend deux parties dont une partie de sélection de sortie OSC sera décrite plus tard, dans deux formes de réalisation, en se reportant aux figures 9 et 10, et l'autre est représentée en détail à la figure 8. La partie de sélection de sortie OSC a pour fonction de recevoir l'identité de sortie YJ et le signal L. En échange, immédiatement ou plus tard, elle fournit l'identité de sortie YJS.

La structure et le fonctionnement des circuits de la figure 8 doivent être considérés en trois étapes distincts du processus de traitement des sorties.

D'abord, il est prévu un compteur par file d'attente de sortie, CLC1 à CLC51 (on rappelle que l'unité de files d'attente OQU comprend 36 + 15 = 51 files d'attente). Chacun de ces compteurs est incrémenté d'une unité à chaque cellule inscrite dans la file d'attente ; il est décrémenté d'une unité à chaque cellule retirée de la file d'attente (affectée à une sortie en émission). Un circuit de test associé à chaque compteur, OTC1 à OTC51 indique si la file d'attente est vide ou, au contraire, contient au moins une cellule en attente, par la valeur d'un signal de test correspondant CIQ1 à CIQ51. L'incrémentation de ces compteurs à lieu à l'inscription de chaque cellule en file d'attente, en réponse aux signaux QW1-QW6 et WE1-WE16 qui identifient la ou les files d'attente dans lesquelles est inscrite une cellule. Un circuit de transcodage WTR recevant ces signaux commande directement les entrées d'incrémentation, notées +1, des compteurs. Ceux qui correspondent aux files d'attente de sortie désignées par les signaux transcodés voient leur contenu augmenté d'une unité. La décrémentation des compteurs à lieu à la lecture de chaque identité de référence de cellule, au moment où, comme on l'a déjà mentionné et comme on va le voir plus loin, les signaux QR1-QR6 et RE1-RE16 désignent la file d'attente dans laquelle va être lue cette identité de référence. Un circuit de transcodage RTR recevant ces derniers signaux commande en conséquence directement les entrées de décrémentation des compteurs, notées -1. Celui qui correspond à la file d'attente désignée par les signaux transcodés voit son contenu diminué d'une unité.

Ensuite, lorsqu'une sortie YJ demande l'affectation d'une nouvelle cellule, cette demande est notée par la partie de sélection de sortie OSC. Immédiatement ou plus tard, cette demande sera servie, dans un intervalle de temps de traitement de sortie au cours duquel l'identité YJS fournie par la partie de sélection de sortie OSC sera précisément YJ, cette demande donnant lieu à la présence du signal OAV également fourni par la partie de sélection de sortie OSC.

Enfin, la sélection de sortie étant accomplie, se traduisant par la fourniture d'une identité de sortie YJS, il est procédé à la désignation d'une file d'attente qui doit fournir l'identité de référence d'une cellule qui sera affectée à la sortie sélectionnée. A cette fin, il est prévu un circuit de sélection de files d'attente de sortie OQSC qui reçoit d'une part l'identité de sortie sélectionnée YJS et d'autre part les signaux de test CIQ1 à CIQ51. Ce circuit de sélection OQSC, dans l'exemple considéré, transmet trois signaux de test au plus parmi les signaux CIQ1-CIQ51 sur les sorties de sélection CIQR, CIQS et CIQT. On a vu précédemment, en effet, qu'une même sortie pouvait, dans l'exemple considéré, appartenir à un groupe d'une ou plusieurs sorties de trafic normal, appartenir aussi à un groupe de distribution comprenant l'ensemble des sorties d'une direction et être sélectionnée individuellement pour la maintenance, de sorte qu'une même sortie peut ainsi servir jusqu'à trois directions sortantes, donc trois files d'attentes correspondantes. La sortie étant sélectionnée pour qu'une cellule lui soit affectée, il importe donc d'identifier les directions sortantes qu'elle sert, ce qui est réalisé par le circuit OQSC. Plus précisément, le circuit OQSC transmet les signaux de test de trois files d'attente de sortie au plus, sur les sorties de sélection CIQR, CIQS, CIQT, dans un ordre déterminé, qui correspond par exemple aux files d'attente de trafic normal, de distribution et de maintenance. Une ou plusieurs de ces sorties de sélection reçoivent ainsi un signal de test indiquant que la file d'attente correspondante contient au moins une cellule. Le circuit de priorité entre files d'attente OQPS a pour fonction de choisir entre celles-ci. Il transfère un seul signal de test ayant une telle signification sur un seul des trois conducteurs de sélection CIQU, CIQV, CIQW. La destination sortante qui va être servie par la sortie sélectionnée est ainsi choisie et identifiée. Ce choix s'effectuera avantageusement selon une priorité définie, par exemple dans l'ordre : trafic normal, distribution, maintenance. Une porte OU SODS fournit alors un signal RST pour indiquer que la sortie sélectionnée va effectivement recevoir une identité de référence de cellule. De plus, un circuit de transcodage d'identification de file d'attente de sortie OQIC reçoit le signal présent sur l'un des conducteurs de sélection CIQU, CIQV, CIQW, en même temps que l'identité de sortie sélectionée YJS. Il fournit en échange les signaux QR1-QR6 et RE1-RE16 qui identifient, comme on l'a vu précédemment, une file d'attente de sortie qui est lue et fournit l'identité de référence de cellule recherchée, tandis que le compteur correspondant CLC1 à CLC51 est décrémenté.

On voit donc que les circuit de la figure 8, une sortie étant sélectionnée, identifient les destinations sortantes servies par cette sortie et en choisissent une qui ait au moins une cellule à fournir. Il reste donc a considérer comment une sortie est sélectionnée en un temps donné.

Le premier cas que l'on va présenter est illustré par la figure 9 qui représente un premier mode de réalisation OSC1 de la partie de sélection de sortie OSC de la figure 8. Dans une première phase, l'identité de sortie YJ sert d'adresse pour orienter un démultiplexeur de sortie DMXS, lequel transmet le signal L sur l'une de ses 33 sorties, qui correspondent aux 33 sorties du commutateur élémentaire (figure 3). L'un des 33 étages d'un registre RD reçoit ainsi le signal L sur son entrée S. Il est ainsi activé si le signal L est présent, c'est-à-dire si la sortie en question demande une cellule à transmettre. Il en va ainsi au début de chaque intervalle de temps de sortie, toutes les fois que le signal L est présent, et les demandes de cellule sont ainsi stockées dans le registre RD, tandis que l'identité de sortie YJ est stockée temporairement dans le registre RYJ.

Dans une deuxième phase qui suit immédiatement la première, le registre RYJ fournit l'identité de sortie YJS. Simultanément, le multiplexeur MXJS, orienté par l'identité YJS, teste la disponibilité de la sortie YJS, de sorte que sa sortie OAV sera active si l'étage correspondant à l'identité YJS dans le registre RD est actif ; la présence du signal OAV valide la demande non encore satisfaite d'une cellule pour la sortie YJS, transmise aux circuits de la logique OSQRCL de la figure 8. Si, de plus, l'une des files d'attente relatives aux directions sortantes servies par cette sortie peut fournir une cellule, le signal RST est fourni. Il est mémorisé par l'étage tampon RZ pour fournir le signal NCO. Il est également fourni à un démultiplexeur DMXZ qui est orienté par l'identité de sortie YJS. Ce signal est alors appliqué à l'entrée de réinitialisation R d'un étage du registre RD ; la demande de cellule enregistrée dans le registre RD qui vient d'être satisfaite est ainsi effacée du registre RD pour la sortie YJS, c'est-à-dire dans ce premier cas YJ.

Par contre, si la sortie YJS, c'est-à-dire dans ce premier cas YJ, n'est pas disponible dans le registre RD, le signal OAV inactif inhibe le fonctionnement des circuits de la figure 8 et aucune sélection et lecture de file d'attente n'est effectuée par la logique OSQRCL et le signal RST reste inactif. Inversement, si le signal OAV est actif, mais si aucune des destinations sortantes correspondant à la sortie YJ ne peut fournir de cellule, la sortie considérée, qui a fourni une demande de cellule, reste demanderesse, car sa disponibilité n'est pas effacée dans le registre RD, le signal RST restant inactif.

Un tel mode de réalisation a l'avantage d'être simple, mais il peut donner lieu à corrélation entre les demandes de cellules de la sortie et les inscriptions de cellules en file d'attente. Il est donc souhaitable de prévoir aussi des moyens pour apporter une décorrélation appropriée. La figure 10 fournit un second mode de réalisation OSC2 de la partie de sélection de sortie OSC permettant d'introduire plusieurs moyens visant à une telle décorrélation.

Dans une première phase, à nouveau, l'identité de sortie YJ sert d'adresse pour orienter un démultiplexeur de sortie DMXS, lequel transmet le signal L sur l'une de ses 33 sorties, qui correspondent au 33 sorties du commutateur élémentaire (figure 3). L'un des 33 étages d'un registre RD reçoit ainsi le signal L sur son entrée S. Il est ainsi activé, si le signal L est présent, c'est-à-dire si la sortie en question demande une cellule à transmettre. Il en va ainsi au début de chaque intervalle de temps de sortie, toutes les fois que le signal L est présent. Le registre RD stocke ainsi des demandes de cellules pour les différentes sorties. Au plus, dans un cycle du multiplexage temporel du traitement des sorties, tous les étages du registre RD seront respectivement activés.

L'identité de sortie sélectionnée YJS, dans ce second cas, est fournie par une source OSS que, pour le moment, l'on présentera comme un simple compteur dont l'entrée d'incrémentation reçoit une impulsion par intervalle de temps de sortie.

Dans une deuxième phase de l'intervalle de temps au début duquel une identité de sortie YJ donne lieu à l'activation d'un étage correspondant du registre RD, la source OSS fournit une identité de sortie sélectionnée YJS qui n'est pas nécessairement identique à l'identité YJ et en sera généralement différente.

L'identité de sortie sélectionnée YJS est appliquée à un multiplexeur de test de disponibilité de sortie MXJS qui transmet sur un conducteur OAV l'état de l'étage du registre RD correspondant à la sortie sélectionnée YJS. Si la sortie sélectionnée a fourni une demande de cellule non encore satisfaite, le signal OAV possède un niveau tel que le fonctionnement des circuits de la figure 8 dans la sélection d'une destination sortante que va servir la sortie sélectionnée est permis. Si de plus l'une des files d'attente relatives aux destinations sortantes servies par cette sortie peut fournir une cellule, le signal RST est fourni. Il est mémorisé par l'étage tampon RZ2 pour fournir le signal NCO comme précédemment. Il est également fourni à un démultiplexeur DMXZ qui est orienté par l'identité de sortie sélectionnée YJS. Ce signal est alors appliqué à l'entrée de réinitialisation R d'un étage du registre RD ; la demande de cellule enregistrée dans le registre RD, qui vient d'être satisfaite, est ainsi effacée du registre RD pour la sortie YJS.

Par contre, si la sortie sélectionnée n'a pas fourni de demande, le signal OAV inactif inhibe le fonctionnement des circuits de la figure 8, d'une manière qui n'est pas représentée, et aucune sélection et lecture de file d'attente n'est effectuée par la logique OSQRCL et le signal RST reste inactif. Inversement, si le signal OAV est actif, mais si aucune des destinations sortantes correspondant à la sortie sélectionnée YJS ne peut fournir de cellule, la sortie considérée, qui a formulé une demande de cellule, reste demanderesse, car sa disponibilité n'est pas effacée du registre RD, le signal rst étant inactif.

On voit ainsi que les dispositions de la figure 10 permettent de séparer en deux phases indépendantes dans le temps (asynchrones) le traitement des demandes de cellules formulées par les sorties, qui sont simplement enregistrées dans le registre RD et le traitement d'affectation de cellules aux sorties sélectionnées qui dépend d'une source OSS.

Si l'on suppose qu'il y a 33 sorties ayant chacune un intervalle de temps dans un cycle de multiplexage, dans un ordre donné, chacune peut formuler une demande et la voir enregistrée dans le registre RD au cours d'un tel cycle. Si la source OSS est un compteur à 33 positions et fournit ainsi les 33 adresses de sorties, toutes les sorties pourront obtenir une affectation de cellules dans le même cycle. Mais il n'est pas nécessaire que le compteur de la source OSS fournisse les 33 adresses de sorties dans le même ordre et avec la même origine que pour ce qui concerne le multiplexage des sorties.

On peut ainsi, selon l'invention, prévoir notamment de faire accomplir un ou plusieurs pas supplémentaires inactifs au compteur de la source OSS, en un moment quelconque approprié, de sorte que, l'ordre du traitement d'affectation des sorties étant inchangé, c'est l'origine qui soit décalée, de façon régulière ou non, pourvu que le traitement de toutes les sorties dans un cycle du multiplexage soit maintenu. Ces pas supplémentaires, selon l'invention, peuvent être accomplis une fois pas cycle du multiplexage temporel des sorties. Additionnellement, selon l'invention, on peut incorporer dans la source OSS des moyens pour inhiber lesdits pas supplémentaire une fois tous les N cycles, N étant de préférence ni multiple, ni sous-multiple du nombre de sorties. On peut encore, selon l'invention, utiliser une source de valeurs numériques à caractère aléatoire ou pseudo aléatoire pour déterminer le nombre desdits pas supplémentaires. Une autre possibilité est de positionner le compteur de la source OSS dans une position spécifiée, par exemple au début de chaque cycle du multiplexage temporel des sorties. Cette valeur spécifiée sera avantageusement la valeur numérique aléatoire ou pseudo-aléatoire précédemment mentionnée. On peut même envisager d'en venir à une désignation des sorties sélectionnées purement aléatoire. Des solutions intermédiaires peuvent être également envisagées, selon le degré de décorrélation requis entre l'arrivée du trafic de cellules sur les entrées du commutateur élémentaire et la distribution de ce trafic sur les différentes sorties disponibles pour groupes de sorties correspondant chacun à une destination sortante.

## Revendications

1. Système de mémorisation temporaire d'information comprenant une mémoire tampon (BM) enregistrant des données structurées en blocs de données de longueur fixe ou variable, comportant chacun un ou plusieurs éléments de données, une pluralité de files d'attente servant à lier entre eux les blocs de données en vue de les fournir de façon sélective sur des sorties individuelles pouvant appartenir à des destinations distinctes et une logique de gestion de ces files d'attente, caractérisé par le fait que ladite logique de gestion de files d'attente est une logique de gestion de files d'attente de blocs de données et de sélection de sortie (COQML) contenant une file d'attente propre à chaque destination sortante, de sorte que, un bloc de données étant assigné à une destination sortante, il suffit de lier son identité dans la file d'attente de cette destination sortante, ladite logique de gestion de files d'attente de blocs de données et de sélection de sortie (COQML) comprenant des moyens de sélection de bloc de données (OSQRCL) intervenant lorsqu'à une sortie individuelle doit être affecté un bloc de données en attente, lesquels comportent des moyens (OQSC, OQPS, OQIC) qui identifient une file d'attente d'une destination sortante à laquelle cette sortie appartient, obtiennent de cette file d'attente la désignation d'un bloc de données (FSAO) et affectent le bloc de données désigné à la sortie considérée (YJS) en initialisant (NCO) le transfert de ce bloc de données vers cette sortie individuelle.

2. Système de mémorisation temporaire d'information conforme à la revendication 1, caractérisé en ce que, une même sortie pouvant appartenir à plusieurs destinations sortantes, lesdits moyens de sélection de bloc de données (OSQRCL) comprennent des moyens de sélection de destination sortante (OQSC, OQPS, OQIC) pour identifier des destinations sortantes auxquelles appartient une sortie considérée, identifier celles de ces destinations sortantes ayant au moins un bloc de données à transférer et pour sélectionner une destination sortante parmi ces dernières destinations sortantes, l'identité de la destination sortante sélectionnée permettant alors auxdits moyens de sélection de bloc de données (OSQRCL) d'établir l'identité (QR1-QR6, RE1-RE16) de la file d'attente de cette destination sortante sélectionnée.

3. Système de mémorisation temporaire d'information conforme à la revendication 2, caractérisé en ce que lesdits moyens de sélection de destination sortante (OQSC, OQPS, OQIC) sont agencés pour identifier les destinations sortantes (CIQ1-CIQ51) ayant au moins un bloc de données à transférer en considérant ces destinations sortantes selon un ordre (CIQR, CIQS, CIQT) basé sur des types de destination et pour sélectionner une destination sortante parmi ces dernières destinations sortantes sur la base dudit ordre.

4. Système de mémorisation temporaire d'information conforme à la revendication 1, 2 ou 3, caractérisé en ce que lesdits moyens de sélection de destination sortante (OQSC, OQPS, OQIC), dans le but d'identifier les destinations sortantes ayant au moins un bloc de données à transférer, comprennent un compteur (CLC1-CLC51) par destination sortante, donnant le nombre de blocs de données à transférer pour cette destination sortante, ainsi qu'un circuit détecteur (OTC1-OTC51) spécifiant si ce nombre est nul ou différent de zéro.

5. Système de mémorisation temporaire d'information conforme à la revendication 1, 2, 3 ou 4, caractérisé en ce que ladite logique de gestion de files d'attente de blocs de données et de sélection de sortie (COQML) comprend des moyens de sélection de sortie (OSC) opérant en deux phases successives durant des intervalles de temps d'un cycle répétitif, une première phase prévue pour la réception d'une sortie individuelle demandeuse d'une indication (L) qu'un bloc de données doit lui être affecté et une deuxième phase prévue pour la fourniture de l'identité d'une sortie sélectionnée (YJS) à laquelle un bloc de données doit être affecté.

6. Système de mémorisation temporaire d'information conforme à la revendication 5, caractérisé en ce que ladite identité de sortie sélectionnée (YJS) fournie dans une deuxième phase est celle de ladite sortie individuelle demandeuse (YJ) de la première phase immédiatement antérieure.

7. Système de mémorisation temporaire d'information conforme à la revendication 5, caractérisé en ce que ladite identité de sortie sélectionnée (YJS) est fournie par une source d'identité de sortie sélectionnée (OSS), de sorte que l'identité de sortie sélectionnée (YJS) soit définie indépendamment de l'identité de ladite sortie individuelle demandeuse (YJ).

8. Système de mémorisation temporaire d'information conforme à la revendication 7, caractérisé en ce que ladite source (OSS) est un compteur dont le nombre de positions utiles est égal au nombre desdits intervalles de temps et qui passe par toutes ses positions à raison d'une par intervalle de temps dans ledit cycle.

9. Système de mémorisation temporaire d'information conforme à la revendication 8, caractérisé en ce que le compteur de ladite source (OSS) accomplit un ou plusieurs pas supplémentaires, en avant ou en arrière, à intervalles réguliers ou non.

10. Système de mémorisation temporaire d'information conforme à la revendication 9, caractérisé en ce que le compteur de ladite source accomplit un ou plusieurs pas supplémentaires, en avant ou en arrière, une fois dans chacun desdits cycles.

11. Système de mémorisation temporaire d'information conforme à la revendication 10, caractérisé en ce que l'accomplissement desdits pas supplémentaires est inhibé un cycle sur N, N n'étant ni multiple, ni sous-multiple du nombre d'intervalles de temps d'un cycle.

12. Système de mémorisation temporaire d'information conforme à la revendication 9, 10 ou 11, caractérisé en ce que le nombre desdits pas supplémentaire est à chaque fois fourni par une source de valeurs numériques successives à caractère aléatoire ou pseudo-aléatoire.

13. Système de mémorisation temporaire d'information conforme à la revendication 8, caractérisé en ce que le compteur de ladite source (OSS) est mis dans une position spécifiée, au début de chaque cycle.

14. Système de mémorisation temporaire d'information conforme à la revendication 13, caractérisé en ce que ladite position spécifiée est fournie à partir ou en tenant compte d'une source de valeurs numériques successives à caractère aléatoire ou pseudo-aléatoire.

15. Système de mémorisation temporaire d'information conforme à la revendication 7, caractérisé en ce que ladite source d'identité de sortie sélectionnée est une source de valeurs numériques successives à caractère aléatoire ou pseudo-aléatoire.

16. Système de mémorisation temporaire d'information conforme à l'une quelconque des revendications précédentes, caractérisé en ce que lesdites files d'attente sont de type FIFO.

17. Système de mémorisation temporaire d'information conforme à l'une quelconque des revendications 1 à 15, caractérisé en ce que lesdites files d'attente sont réalisées chacune par une liste chaînée d'identités de blocs de données en mémoire, une même mémoire pouvant être utilisée par une ou plusieurs files d'attente, le nombre minimal de mémoires correspondant au nombre maximal de groupes de sorties vers lesquels une copie d'un même bloc de données est susceptible d'être transférée dans le cas d'un transfert de point à multipoint.

## Patentansprüche

1. System zur vorübergehenden Informationsspeicherung, mit einem Pufferspeicher (BM), der in Datenblöcken fester oder variabler Länge strukturierte Daten speichern kann, wobei die Blöcke je mindestens ein Datenelement enthalten, mit einer Mehrzahl von Warteschlangen, die die Datenblöcke miteinander verketten sollen, um sie selektiv an individuelle Ausgänge zu liefern, die unterschiedlichen Zielen angehören können, und mit einer Logik zur Verwaltung dieser Warteschlangen, dadurch gekennzeichnet, daß die Logik zur Verwaltung der Warteschlangen eine Logik zur Verwaltung von Warteschlangen von Datenblöcken und zur Ausgangsauswahl (COQML) ist, die eine eigene Warteschlange für jedes ausgehende Ziel enthält, so daß, wenn ein Datenblock einem ausgehenden Ziel zugewiesen ist, lediglich dessen Identität in die Warteschlange dieses ausgehenden Ziels eingebunden werden muß, wobei die Logik zur Verwaltung der Warteschlangen von Datenblöcken und zur Ausgangsauswahl (COQML) Mittel zur Auswahl von Datenblöcken (OSQRCL) aufweist, die wirksam werden, wenn einem individuellen Ausgang ein wartender Datenblock zugewiesen werden soll, und wobei diese Mittel weiter Mittel (OQSC, OQPS, OQIC) enthalten, die eine Warteschlange eines ausgehenden Ziels identifizieren, dem dieser Ausgangs angehört, die weiter von dieser Warteschlange die Bezeichnung eines Datenblocks (FSAO) empfangen und die den bezeichneten Datenblock dem betreffenden Ausgang (YJS) zuordnen, in dem die Übertragung dieses Datenblocks an diesen individuellen Ausgang initialisiert wird (NCO).

2. System zur vorübergehenden Informationsspeicherung nach Anspruch 1, dadurch gekennzeichnet, daß ein Ausgang mehreren ausgehenden Zielen angehören kann und die Auswahlmittel für Datenblöcke (OSQRCL) Mittel zur Auswahl des ausgehenden Ziels (OQSC, OQPS, OQIC) besitzen, um ausgehende Ziele zu identifizieren, denen ein betrachteter Ausgang angehört, um diejenigen der ausgehenden Ziele zu identifizieren, die mindestens einen Datenblock zu übertragen haben, und um ein ausgehendes Ziel unter diesen letzteren ausgehenden Zielen auszuwählen, wobei die Identität des ausgewählten ausgehenden Ziels dann den Mitteln zur Auswahl eines Datenblocks (OSQRCL) die Bildung der Identität (QR1 bis QR6, RE1 bis RE16) der Warteschlange dieses ausgewählten ausgehenden Ziels ermöglicht.

3. System zur vorübergehenden Informationsspeicherung nach Anspruch 2, dadurch gekennzeichnet, daß die Mittel zur Auswahl des ausgehenden Ziels (OQSC, OQPS, OQIC) so ausgebildet sind, daß sie die ausgehenden Ziele (CIQ1 bis CIQ51) identifizieren, die mindestens einen Datenblock zu übertragen haben, wobei diese ausgehenden Ziele gemäß einer Reihenfolge (CIQR, CIQS, CIQT) betrachtet werden, die auf den Arten der Ziele beruht, und daß ein ausgehendes Ziel unter diesen letztgenannten ausgehenden Zielen auf der Basis dieser Reihenfolge ausgewählt wird.

4. System zur vorübergehenden Informationsspeicherung nach Anspruch 1, 2 oder 3, dadurch gekennzeichnet, daß die Mittel zur Auswahl eines ausgehenden Ziels (OQSC, OQPS, OQIC) zur Identifizierung der ausgehenden Ziele, die mindestens einen Datenblock zu übertragen haben, einen Zähler (CLC1 bis CLC51) je ausgehendes Ziel, der die Anzahl von für dieses ausgehende Ziel zu übertragenden Datenblöcken angibt, und weiter eine Detektorschaltung (OTC1 bis OTC51) enthalten, die angibt, ob diese Zahl Null oder ungleich Null ist.

5. System zur vorübergehenden Informationsspeicherung nach Anspruch 1, 2, 3 oder 4, dadurch gekennzeichnet, daß die Logik zur Verwaltung der Warteschlangen von Datenblöcken und zur Ausgangsauswahl (COQML) Ausgangsauswahlmittel (OSC) aufweist, die in zwei aufeinanderfolgenden Phasen während der Zeitintervalle eines sich wiederholenden Zyklus wirksam werden, wobei in einer ersten Phase von einem individuellen, eine Zelle anfordernden Ausgang eine Angabe (L) empfangen wird, daß ein Datenblock diesem Ausgang zugewiesen werden soll, und in einer zweiten Phase die Identität eines ausgewählten Ausgangs (YJS) geliefert wird, dem ein Datenblock zugewiesen werden soll.

6. System zur vorübergehenden Informationsspeicherung nach Anspruch 5, dadurch gekennzeichnet, daß die Identität des ausgewählten Ausgangs (YJS), die in einer zweiten Phase geliefert wird, diejenige des individuellen eine Zelle anfordernden Ausgangs (YJ) aus der unmittelbar vorhergehenden ersten Phase ist.

7. System zur vorübergehenden Informationsspeicherung nach Anspruch 5, dadurch gekennzeichnet, daß die Identität des ausgewählten Ausgangs (YJS) von einer Quelle für die Identität eines ausgewählten Ausgangs (OSS) geliefert wird, so daß die Identität des ausgewählten Ausgangs (YJS) unabhängig von der Identität des individuellen anfordernden Ausgangs (YJ) definiert wird.

8. System zur vorübergehenden Informationsspeicherung nach Anspruch 7, dadurch gekennzeichnet, daß die Quelle (OSS) ein Zähler ist, dessen Anzahl von nutzbaren Zählschritten der Anzahl der Zeitintervalle gleicht und der alle seine Zählschritte durchläuft, und zwar einen je Zeitintervall in diesem Zyklus.

9. System zur vorübergehenden Informationsspeicherung nach Anspruch 8, dadurch gekennzeichnet, daß der Zähler der Quelle (OSS) einen oder mehrere zusätzliche Schritte am Anfang oder am Ende und mit regelmäßigen oder unregelmäßigen Intervallen durchführt.

10. System zur vorübergehenden Informationsspeicherung nach Anspruch 9, dadurch gekennzeichnet, daß der Zähler der Quelle einmal in jedem Zyklus einen oder mehrere zusätzliche Schritte am Anfang oder am Ende durchführt.

11. System zur vorübergehenden Informationsspeicherung nach Anspruch 10, dadurch gekennzeichnet, daß die zusätzlichen Zählschritte in einem von N Zyklen blockiert werden, wobei N weder ein Vielfaches noch ein Untervielfaches der Anzahl von Zeitintervallen eines Zyklus ist.

12. System zur vorübergehenden Informationsspeicherung nach Anspruch 9, 10 oder 11, dadurch gekennzeichnet, daß die Anzahl der zusätzlichen Schritte jedesmal von einer Quelle von aufeinanderfolgenden numerischen Werten zufälliger oder pseudo-zufälliger Art geliefert wird.

13. System zur vorübergehenden Informationsspeicherung nach Anspruch 8, dadurch gekennzeichnet, daß der Zähler der Quelle (OSS) zu Beginn jedes Zyklus in eine bestimmte Zählstellung gebracht wird.

14. System zur vorübergehenden Informationsspeicherung nach Anspruch 13, dadurch gekennzeichnet, daß die bestimmte Zählstellung ausgehend oder unter Berücksichtigung von einer Quelle aufeinanderfolgender numerischer Werte zufälliger oder pseudo-zufälliger Art geliefert wird.

15. System zur vorübergehenden Informationsspeicherung nach Anspruch 7, dadurch gekennzeichnet, daß die Quelle der Identität des ausgewählten Ausgangs eine Quelle von aufeinanderfolgenden numerischen Werten zufälliger oder pseudo-zufälliger Art ist.

16. System zur vorübergehenden Informationsspeicherung nach einem beliebigen der vorhergehenden Ansprüche, dadurch gekennzeichnet, daß die Warteschlangen vom FIFO-Typ sind.

17. System zur vorübergehenden Informationsspeicherung nach einem beliebigen der Ansprüche 1 bis 15, dadurch gekennzeichnet, daß die Warteschlangen je von einer verketteten Liste von Identitäten von gespeicherten Datenblöcken gebildet werden, wobei ein gemeinsamer Speicher für eine oder mehrere Warteschlangen verwendet werden kann und die Mindestanzahl von Speichern der Maximalanzahl von Gruppen von Ausgängen entspricht, auf die eine Kopie eines gleichen Datenblocks im Fall einer Übertragung von einem Punkt auf mehrere Punkte übertragen werden kann.

## Claims

1. Temporary information storage system comprising a buffer memory (BM) storing data structured as fixed or variable length blocks of data, each comprising one or more data elements, a plurality of queues serving to interlink the blocks of data to transfer them selectively to individual outlets that can belong to separate destinations and a management logic for said queues, characterised in that said queue management logic is a data block (or cell) and outlet selection queue management logic (COQML) containing a queue specific to each outgoing destination, such that when a data block is assigned to an outgoing destination, it is sufficient to write its identity in the queue for this outgoing destination, said data block and outlet selection queue management logic (COQML) comprising data block selection means (OSQRCL) acting when a queued data block must be assigned to an individual outlet, which comprise means (OQSC, OQPS, OQIC) which identify a queue of an outgoing destination to which this outlet belongs, obtain from this queue the address (FSAO) of a data block and assign the selected data block to the outlet in question (YJS) by initiating (NCO) the transfer of this data block to this individual outlet.

2. Temporary information storage system in accordance with claim 1, characterised in that, it being possible for one outlet to belong to a number of outgoing destinations, said data block selection means (OSQRCL) comprise outgoing destination selection means (OQSC, OQPS, OQIC) to identify outgoing destinations to which a given outlet belongs, to identify those of said outgoing destinations having at least one data block to transfer and to select an outgoing destination from these last outgoing destinations, the identity of the selected outgoing destination then enabling said data block selection means (OSQRCL) to establish the identity (QR1-QR6, RE1-RE16) of the queue of this selected outgoing destination.

3. Temporary information storage system in accordance with claim 2, characterised in that said outgoing destination selection means (OQSC, OQPS, OQIC) are constructed to identify the outgoing destinations (CIQ1-CIQ51) having at least one data block to transfer by considering said outgoing destinations in an order (CIQR, CIQS, CIQT) based on destination types and to select one outgoing destination out of these last outgoing destinations on the basis of said order.

4. Temporary information storage system in accordance with claim 1, 2 or 3, characterised in that said outgoing destination selection means (OQSC, OQPS, OQIC), with the objective of identifying the outgoing destinations having at least one data block to transfer, comprise a counter (CLC1-CLC51) for each outgoing destination, giving the number of data blocks to be transferred for said outgoing destination, and a detection circuit (OTC1-OTC51) specifying whether said number is zero or different from zero.

5. Temporary information storage system in accordance with claim 1, 2, 3 or 4, characterised in that said data block and outlet selection queue management logic (COQML) comprises outlet selection means (OSC) operating in two successive phases during time slots of a repetitive cycle, a first phase for receiving an individual outlet requesting an indication (L) that a data block must be assigned to it and a second phase for supplying the identity of a selected outlet (YJS) to which a data block must be assigned.

6. Temporary information storage system in accordance with claim 5, characterised in that said selected outlet identity (YJS) supplied in a second phase is that of said requesting individual outlet (YJ) of the immediately preceding first phase.

7. Temporary information storage system in accordance with claim 5, characterised in that said selected outlet identity (YJS) is supplied by a selected outlet identity source (OSS), such that the selected outlet identity (YJS) is defined independently of the identity of said requesting individual outlet (YJ).

8. Temporary information storage system in accordance with claim 7, characterised in that said source (OSS) is a counter with a number of active positions equal to the number of said time slots and which passes through all its positions at the rate of one per time slot in said cycle.

9. Temporary information storage system in accordance with claim 8, characterised in that the counter of said source (OSS) accomplishes one or more additional steps, forwards or backwards, at regular or irregular intervals.

10. Temporary information storage system in accordance with claim 9, characterised in that said source counter accomplishes one or more additional steps, forwards or backwards, once in each of said cycles.

11. Temporary information storage system in accordance with claim 10, characterised in that the accomplishment of said additional steps is disabled in one cycle out of N, where N is neither a multiple nor a sub-multiple of the number of time slots in a cycle.

12. Temporary information storage system in accordance with claim 9, 10 or 11, characterised in that the number of said additional steps is on each occasion supplied by a source of successive random or pseudo-random numbers.

13. Temporary information storage system in accordance with claim 8, characterised in that the counter of said source (OSS) is set to a specified position at the start of each cycle.

14. Temporary information storage system in accordance with claim 13, characterised in that said specified position is supplied from or taking account of a source of successive random or pseudo-random numbers.

15. Temporary information storage system in accordance with claim 7, characterised in that said selected outlet identity source is a source of successive random or pseudo-random numbers.

16. Temporary information storage system in accordance with any of the preceding claims, characterised in that said queues are FIFO queues.

17. Temporary information storage system in accordance with any of claims 1 to 15, characterised in that each of said queues is implemented by a linked list of identities of data blocks in memory, it being possible for one memory to be used by one or more queues, the minimum number of memories being equal to the maximum number of outlet groups to which a copy of a particular data block may be transferred in the case of a point-to-multipoint transfer.
